# EUROPEAN PATENT APPLICATION

(11) **EP 4 668 822 A1**
(43) Date of publication of application: **24.12.2025**
(21) Application number: 24755818.2
(22) Date of filing: 02.01.2024
(51) Int. Cl.: H04W 16/28, H04W 72/04

(54) **BEAM CONFIGURATION PARAMETER DETERMINATION METHOD AND APPARATUS, AND BEAM CONFIGURATION PARAMETER INDICATION METHOD AND APPARATUS**

(30) Priority: 17.02.2023 CN 202310146608
(71) Applicant: Datang Mobile Communications Equipment Co., Ltd., Beijing 100085 (CN)
(72) Inventor: LI, Xiaojiao, Beijing 100085 (CN); WANG, Junwei, Beijing 100085 (CN)
(74) Representative: dompatent
(86) International application number: PCT/CN2024/070082
(87) International publication number: WO 2024/169442

(57) **Abstract**

Provided are a method and an apparatus for determining a beam configuration parameter, and a method and an apparatus for indicating a beam configuration parameter. The method includes: obtaining, by a network controlled repeater (NCR), a radio resource control (RRC) signaling, where the RRC signaling comprises at least one set of beam configuration parameters, each set of beam configuration parameters in the at least one set of beam configuration parameters comprises beam information and a first parameter corresponding to the beam information, and the first parameter comprises at least one of a periodicity or a subcarrier spacing (SCS); and determining, by the NCR, a target beam configuration parameter according to the at least one set of beam configuration parameters, where the target beam configuration parameter is used for data transmission in an access link, and the access link is a transmission link between the NCR and a UE.

## Description

### CROSS-REFERENCE TO RELATED APPLICATION

The present disclosure claims a priority of Chinese Patent Application No. 202310146608.4 entitled "method and apparatus for determining beam configuration parameter, and method and apparatus for indicating beam configuration parameter" filed on February 17, 2023, the entire contents of which are hereby incorporated by reference in their entirety.

### TECHNICAL FIELD

The present disclosure relates to the field of communication technologies, particularly to a method and an apparatus for determining a beam configuration parameter, and a method and an apparatus for indicating a beam configuration parameter.

### BACKGROUND

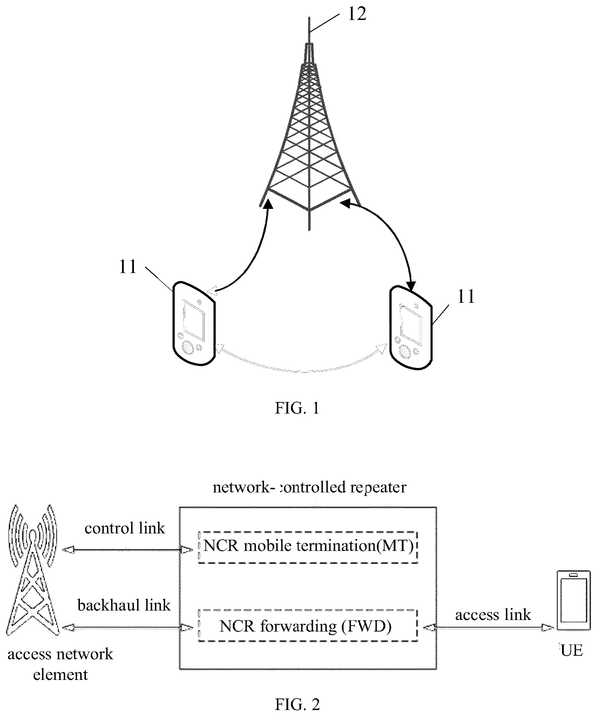

A main difference between a network-controlled repeater (Network-Controlled Repeater, NCR) and a traditional relay is that a base station may control the NCR serving the base station. FIG. 2 shows a link relationship between the base station, the NCR, and a user equipment (UE). The NCR includes a mobile termination (Mobile Termination, MT) part and a forwarding (Forwarding, FWD) part. There are two links between the base station and the NCR, one is a control link between the base station and the NCR mobile terminal (NCR-MT), and the other is the backhaul link between the base station and the NCR-FWD. There is an access link between the NCR and the UE, which is referred to as the access link (Access link) between the NCR-FWD and the UE.

In the related technologies, beamforming of the access link is supported to improve receiving performance of the UE side, but there is currently no relevant solution for determining beam related information of the access link.

### SUMMARY

The objective of this disclosure is to provide a method and an apparatus for determining a beam configuration parameter, and a method and an apparatus for indicating a beam configuration parameter, to solve the problem of how to determine beam related information for the access link.

In order to achieve the above objective, the present disclosure provides a method for determining a beam configuration parameter, including:
obtaining, by a network controlled repeater (NCR), a radio resource control (RRC) signaling, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS); and
determining, by the NCR, a target beam configuration parameter according to the at least one set of beam configuration parameters, where the target beam configuration parameter is used for data transmission in an access link, and the access link is a transmission link between the NCR and a UE.

Optionally, the beam information includes at least one of the following:
beam index; or
time resource set of a beam.

Optionally, the time resource set includes at least one of the following:
a first slot offset, where the first slot offset includes a slot offset of a starting slot of the periodicity relative to a starting position of a radio frame number;
a second slot offset, where the second slot offset includes a slot offset of a starting slot position of a time resource of the beam relative to a starting position of the periodicity;
starting symbol information, where the starting symbol information includes a symbol offset of a starting symbol position of a time resource of the beam relative to a starting slot within the periodicity; or
duration information, where the duration information includes a number of symbols corresponding to a length of a time resource of the beam.

Optionally, a length of the periodicity is an integer multiple of a slot configuration in a time division duplex (TDD) system; or
a length of the periodicity is an integer multiple of a periodicity of a synchronization signal/physical broadcast channel signal block (SSB); or
a length of the periodicity is a configured candidate periodicity length.

Optionally, the SCS is a first subcarrier spacing or a second subcarrier spacing, where the first subcarrier spacing is determined according to a subcarrier spacing corresponding to a frequency band of the access link; and the second subcarrier spacing is determined according to a subcarrier spacing corresponding to a frequency band of a control link, and the control link is a transmission link between the NCR and a base station.

Optionally, an effective time of the beam information includes any one of the following:
a starting time of a target slot, where the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers;
a starting time of a target subframe, where the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers; or
a starting time of a target periodicity, where the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers.

Optionally, the RRC signaling includes a first RRC signaling and a second RRC signaling, the first RRC signaling includes a first configuration parameter, the second RRC signaling includes a second configuration parameter, an obtaining time of the second RRC signaling is later than an obtaining time of the first RRC signaling, the first configuration parameter includes at least one set of beam configuration parameters, and the second configuration parameter includes at least one set of beam configuration parameters.

Optionally, the first configuration parameter includes one set of beam configuration parameters, and the second configuration parameter includes one set of beam configuration parameters;
the determining, by the NCR, the target beam configuration parameter according to the at least one set of beam configuration parameters includes:
after obtaining the second RRC signaling, determining the one set of beam configuration parameters included in the second configuration parameter as the target beam configuration parameter; or
after obtaining the second RRC signaling, determining the target beam configuration parameter according to a positional relationship between a time resource indicated by the first configuration parameter and a time resource indicated by the second configuration parameter.

Optionally, the determining the target beam configuration parameter according to the positional relationship between the time resource indicated by the first configuration parameter and the time resource indicated by the second configuration parameter includes:
in a case that a first condition is met, determining the target beam configuration parameter according to the positional relationship between the time resource indicated by the first configuration parameter and the time resource indicated by the second configuration parameter; and/or,
in a case that the first condition is not met, determining the one set of beam configuration parameters included in the second configuration parameter as the target beam configuration parameter,
where the first condition includes at least one of the following:
   a periodicity in the first configuration parameter is the same as a periodicity in the second configuration parameter; or
   an SCS in the first configuration parameter is the same as an SCS in the second configuration parameter.

Optionally, the determining the target beam configuration parameter according to the positional relationship between the time resource indicated by the first configuration parameter and the time resource indicated by the second configuration parameter includes:
in a case that the time resource indicated by the first configuration parameter at least partially overlaps the time resource indicated by the second configuration parameter, determining the one set of beam configuration parameters included in the second configuration parameter as the target beam configuration parameter; or
in a case that the time resource indicated by the first configuration parameter does not overlap with the time resource indicated by the second configuration parameter, determining the one set of beam configuration parameters included in the first configuration parameter and the one set of beam configuration parameters included in the second configuration parameter as the target beam configuration parameter.

Optionally, the first RRC signaling further includes first priority indication information; the second RRC signaling further includes second priority indication information; where the first priority indication information is used to indicate that a priority of the first configuration parameter is a first priority, and the second priority indication information is used to indicate that a priority of the second configuration parameter is a second priority.

Optionally, the first configuration parameter includes one set of beam configuration parameters, and the second configuration parameter includes one set of beam configuration parameters;
the determining, by the NCR, the target beam configuration parameter according to the at least one set of beam configuration parameters includes:
in a case that a second condition is met, for a first time resource, determining one set of beam configuration parameters included by a configuration parameter corresponding to a target priority as the target beam configuration parameter, and for a second time resource, determining the one set of beam configuration parameters included in the first configuration parameter and the one set of beam configuration parameters included in the second configuration parameter as the target beam configuration parameter, where the target priority is a higher priority of the first priority and the second priority; and/or,
in a case that the second condition is not met, determining the one set of beam configuration parameters included in the first configuration parameter and the one set of beam configuration parameters included in the second configuration parameter as the target configuration parameter,
where the second condition includes any one of the following:
   a time resource indicated by the first configuration parameter at least partially overlaps a time resource indicated by the second configuration parameter;
   a periodicity in the first configuration parameter is the same as a periodicity in the second configuration parameter, and a time resource in the first configuration parameter at least partially overlaps a time resource in the second configuration parameter;
   an SCS in the first configuration parameter is the same as an SCS in the second configuration parameter, and a time resource in the first configuration parameter at least partially overlaps a time resource in the second configuration parameter; or
   an SCS in the first configuration parameter is the same as an SCS in the second configuration parameter, a periodicity in the first configuration parameter is the same as a periodicity in the second configuration parameter, and a time resource in the first configuration parameter at least partially overlaps a time resource in the second configuration parameter,
   where the first time resource is an overlapping time resource between the time resource indicated by the first configuration parameter and the time resource indicated by the second configuration parameter; and
   the second time resource is a time resource in the time resource indicated by the first configuration parameter and the time resource indicated by the second configuration parameter excluding the first time resource.

Optionally, the first RRC signaling further includes first index information, and the second RRC signaling further includes second index information; where the first index information includes an index corresponding to each set of beam configuration parameters in the first configuration parameter, and the second index information includes an index corresponding to each set of beam configuration parameters in the second configuration parameter.

Optionally, the first configuration parameter includes at least one set of beam configuration parameters, and the second configuration parameter includes at least one set of beam configuration parameters; the determining, by the NCR, the target beam configuration parameter according to the at least one set of beam configuration parameters includes:
in a case that a first index corresponding to a first set of beam configuration parameters in the first configuration parameter is different from a second index corresponding to a second set of beam configuration parameters in the second configuration parameter, determining the first set of beam configuration parameters corresponding to the first index and the second set of beam configuration parameters corresponding to the second index as the target beam configuration parameter; or,
in a case that a first index corresponding to a first set of beam configuration parameters in the first configuration parameter is the same as a second index corresponding to a second set of beam configuration parameters in the second configuration parameter, determining the second set of beam configuration parameters as a target beam configuration parameter corresponding to the first index; or,
determining a target beam configuration parameter corresponding to the first index according to a third condition,
where the third condition includes one or more of the following:
   a periodicity in the first set of beam configuration parameters and a periodicity in the second set of beam configuration parameters are the same or different; or
   an SCS in the first set of beam configuration parameters and an SCS in the second set of beam configuration parameters are the same or different,
   where the first set of beam configuration parameters is any one set of beam configuration parameters in the at least one set of beam configuration parameters included in the first configuration parameter, and the second set of beam configuration parameters is any one of the beam configuration parameters in at least one set of beam configuration parameters included in the second configuration parameter.

Optionally, the determining the target beam configuration parameter corresponding to the first index according to the third condition includes:
in a case that the periodicity in the first set of beam configuration parameters is the same as the periodicity in the second set of beam configuration parameters, the SCS in the first set of beam configuration parameters is the same as the SCS in the second set of beam configuration parameters, and a time resource indicated by the first set of beam configuration parameters at least partially overlaps a time resource indicated by the second set of beam configuration parameters, for a third time resource, determining the second set of beam configuration parameters as the target beam configuration parameter corresponding to the first index, and for a fourth time resource, determining the first set of beam configuration parameters and the second set of beam configuration parameters as the target beam configuration parameter corresponding to the first index, where the third time resource is an overlapping time resource between the time resource indicated by the first set of beam configuration parameters and the time resource indicated by the second set of beam configuration parameters, and the fourth time resource is a time resource in the time resource indicated by the first set of beam configuration parameters and the time resource indicated by the second set of beam configuration parameters excluding the third time resource; and
in a case that the periodicity in the first set of configuration parameters is different from the periodicity in the second set of configuration parameters, and/or the SCS in the first set of configuration parameters is different from the SCS in the second set of configuration parameters, taking the second set of beam configuration parameters as the target beam configuration parameter corresponding to the first index,
where the first set of beam configuration parameters is any one set of beam configuration parameters in the at least one set of beam configuration parameters included in the first configuration parameter, and the second set of beam configuration parameters is any one of the beam configuration parameters in at least one set of beam configuration parameters included in the second configuration parameter.

Optionally, the determining, by the NCR, the target beam configuration parameter according to the at least one set of beam configuration parameters includes:
in a case that a fifth time resource indicated by the at least one set of beam configuration parameters in the RRC signaling at least partially overlaps a sixth time resource indicated by a beam configuration parameter in a downlink control information (DCI), determining the target beam configuration parameter according to a first rule, a second rule or a third rule,
where the first rule includes: for an overlapping resource, determining the target beam configuration parameter according to the at least one set of beam configuration parameters in the RRC signaling; for a resource in the fifth time resource excluding the overlapping resource, determining the target beam configuration parameter according to the at least one set of beam configuration parameters in the RRC signaling; and for a resource in the sixth time resource excluding the overlapping resource, determining the target beam configuration parameter according to the beam configuration parameter in the DCI;
the second rule includes: for an overlapping resource, determining the target beam configuration parameter according to the at least one set of beam configuration parameters in the RRC signaling; and for a first target time resource, determining a beam configuration parameter of the first target time resource according to a part of the beam configuration parameter in the DCI, where the part of the beam configuration parameter in the DCI is a beam configuration parameter of a second target time resource, the second target time resource is a time resource in the sixth time resource excluding a time resource before the overlapping resource, the first target time resource is a resource located after the overlapping resource, and a resource length corresponding to the first target time resource is the same as a resource length corresponding to the second target time resource;
the third rule includes: for an overlapping resource, determining the target beam configuration parameter according to the beam configuration parameter in the DCI; for a resource in the fifth time resource excluding the overlapping resource, determining the target beam configuration parameter according to the at least one set of beam configuration parameters in the RRC signaling; and for a resource in the sixth time resource excluding the overlapping resource, determining the target beam configuration parameter according to the beam configuration parameter in the DCI.

Optionally, the determining the target beam configuration parameter according to the first rule, the second rule or the third rule includes:
determining the target configuration parameter according to the first rule, the second rule or the third rule according to indication information transmitted by a network-side device,
where the indication information is used to indicate a priority relationship between the beam configuration parameters in the RRC signaling and the beam configuration parameter in the DCI, and the indication information is indicated through the RRC signaling or the DCI.

An embodiment of the present disclosure further provides a method for indicating a beam configuration parameter, including:
transmitting, by a network-side device, a radio resource control (RRC) signaling to a network controlled repeater (NCR), where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS).

Optionally, the beam information includes at least one of the following:
beam index; or
time resource set of a beam.

Optionally, the time resource set includes at least one of the following:
a first slot offset, where the first slot offset includes a slot offset of a starting slot of the periodicity relative to a starting position of a radio frame number;
a second slot offset, where the second slot offset comprises a slot offset of a starting slot position of a time resource of the beam relative to a starting position of the periodicity;
starting symbol information, where the starting symbol information includes a symbol offset of a starting symbol position of a time resource of the beam relative to a starting slot within the periodicity; or
duration information, where the duration information includes a number of symbols corresponding to a length of a time resource of the beam.

Optionally, a length of the periodicity is an integer multiple of a slot configuration in a time division duplex (TDD) system; or
a length of the periodicity is an integer multiple of a periodicity of the synchronization signal/physical broadcast channel signal block (SSB); or
a length of the periodicity is a configured candidate periodicity length.

Optionally, the SCS is a first subcarrier spacing or a second subcarrier spacing, where the first subcarrier spacing is determined according to a subcarrier spacing corresponding to a frequency band of the access link; and the second subcarrier spacing is determined according to a subcarrier spacing corresponding to a frequency band of a control link, and the control link is a transmission link between the NCR and a base station.

Optionally, an effective time of the beam information includes any one of the following:
a starting time of a target slot, where the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers;
a starting time of a target subframe, where the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers; or
a starting time of a target periodicity, where the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers.

An embodiment of the present disclosure further provides an apparatus for determining a beam configuration parameter, including: a memory, a transceiver and a processor, where the memory is configured to store a computer program; the transceiver is configured to receive and transmit data under the control of the processor; and the processor is configured to read the computer program from the memory to perform the following operations:
obtaining a radio resource control (RRC) signaling, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS); and
determining a target beam configuration parameter according to the at least one set of beam configuration parameters, where the target beam configuration parameter is used for data transmission in an access link, and the access link is a transmission link between an NCR and a UE.

Optionally, the beam information includes at least one of the following:
beam index; or
time resource set of a beam.

Optionally, the time resource set includes at least one of the following:
a first slot offset, where the first slot offset includes a slot offset of a starting slot of the periodicity relative to a starting position of a radio frame number;
a second slot offset, where the second slot offset includes a slot offset of a starting slot position of a time resource of the beam relative to a starting position of the periodicity;
starting symbol information, where the starting symbol information includes a symbol offset of a starting symbol position of a time resource of the beam relative to a starting slot within the periodicity; or
duration information, where the duration information includes a number of symbols corresponding to a length of a time resource of the beam.

Optionally, a length of the periodicity is an integer multiple of a slot configuration in a time division duplex (TDD) system; or
a length of the periodicity is an integer multiple of a periodicity of a synchronization signal/physical broadcast channel signal block (SSB); or
a length of the periodicity is a configured candidate periodicity length.

Optionally, the SCS is a first subcarrier spacing or a second subcarrier spacing,
where the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between the NCR and a base station.

Optionally, an effective time of the beam information includes any one of the following:
a starting time of a target slot, where the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers;
a starting time of a target subframe, where the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers; or
a starting time of a target periodicity, where the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers.

An embodiment of the present disclosure further provides an apparatus for indicating a beam configuration parameter, including: a memory, a transceiver, and a processor, where the memory is configured to store a computer program; the transceiver is configured to receive and transmit data under the control of the processor; and the processor is configured to read the computer program from the memory to perform the following operations:
transmitting a radio resource control (RRC) signaling to, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS).

Optionally, the beam information includes at least one of the following:
beam index; or
time resource set of a beam.

Optionally, the time resource set includes at least one of the following:
a first slot offset, where the first slot offset includes a slot offset of a starting slot of the periodicity relative to a starting position of a radio frame number;
a second slot offset, where the second slot offset includes a slot offset of a starting slot position of a time resource of the beam relative to a starting position of the periodicity;
starting symbol information, where the starting symbol information includes a symbol offset of a starting symbol position of a time resource of the beam relative to a starting slot within the periodicity; or
duration information, where the duration information includes a number of symbols corresponding to a length of a time resource of the beam.

Optionally, a length of the periodicity is an integer multiple of a slot configuration in a time division duplex (TDD) system; or
a length of the periodicity is an integer multiple of a periodicity of the synchronization signal/physical broadcast channel signal block (SSB); or
a length of the periodicity is a configured candidate periodicity length.

Optionally, the SCS is a first subcarrier spacing or a second subcarrier spacing,
where the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between an NCR and a base station.

Optionally, an effective time of the beam information includes any one of the following:
a starting time of a target slot, where the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers;
a starting time of a target subframe, where the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers; or
a starting time of a target periodicity, where the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers.

An embodiment of the present disclosure further provides an apparatus for determining a beam configuration parameter, including:
an obtaining unit, configured to obtain a radio resource control (RRC) signaling, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS); and
a determining unit, configured to determine a target beam configuration parameter according to the at least one set of beam configuration parameters, where the target beam configuration parameter is used for data transmission in an access link, and the access link is a transmission link between an NCR and a UE.

An embodiment of the present disclosure further provides an apparatus for indicating a beam configuration parameter, including: a transmitting unit, configured to transmit a radio resource control (RRC) signaling to a network controlled repeater (NCR), where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS).

An embodiment of the present disclosure further provides a processor readable storage medium, which stores a computer program for causing the processor to perform steps of the method for determining a beam configuration parameter as described above, or for causing the processor to perform steps of the method for indicating a beam configuration parameter as described above.

The above-mentioned technical solution of the present disclosure has at least the following beneficial effects.

In the embodiments of the present disclosure, a network controlled repeater (NCR) obtains a radio resource control (RRC) signaling, where the RRC signaling includes at least one set of beam configuration parameters, each set of beam configuration parameters includes beam information and a first parameter corresponding to the beam information, and the first parameter includes at least one of a periodicity or a subcarrier spacing (SCS). The NCR determines a target beam configuration parameter according to the at least one set of beam configuration parameters, where the target beam configuration parameter is used for data transmission in an access link, and the access link is a transmission link between the NCR and a UE. Through the above scheme, the purpose of determining the beam configuration parameter of the access link can be achieved.

### BRIEF DESCRIPTION OF THE DRAWINGS

FIG. 1 shows a structural diagram of a network system to which an embodiment of the present disclosure is applicable;
FIG. 2 shows a schematic structural diagram of an NCR link;
FIG. 3 shows a schematic diagram of beam information of an access link of an NCR indicated by an L1 signaling;
FIG. 4 shows a flow chart of a method for determining a beam configuration parameter in an embodiment of the present disclosure;
FIG. 5 shows a schematic diagram of an effective time of beam information in an embodiment of the present disclosure;
FIG. 6 shows a schematic diagram of determining a target beam configuration parameter according to a first rule, a second rule and a third rule in an embodiment of the present disclosure;
FIG. 7 shows a flow chart of a method for indicating beam configuration parameters in an embodiment of the present disclosure;
FIG. 8 shows a structural block diagram of an apparatus for determining a beam configuration parameter in an embodiment of the present disclosure;
FIG. 9 shows a structural block diagram of an apparatus for indicating a beam configuration parameter in an embodiment of the present disclosure;
FIG. 10 shows a schematic module diagram of an apparatus for determining a beam configuration parameter in an embodiment of the present disclosure; and
FIG. 11 shows a schematic module diagram of an apparatus for indicating a beam configuration parameter in an embodiment of the present disclosure.

### DETAILED DESCRIPTION

In order to make a to-be-solved technical problem, a technical solution and advantages of the present disclosure clearer, a detailed description will be given below in conjunction with the accompanying drawings and specific embodiments.

FIG. 1 shows a structural diagram of a network system to which an embodiment of the present disclosure is applicable. The wireless communication system includes a terminal device 11 and a network-side device 12. The terminal device 11 may also be referred to as a terminal or user equipment (User Equipment, UE). It should be noted that a specific type of terminal 11 is not limited in the embodiments of the present disclosure. The network-side device 12 may be a base station or a core network. It should be noted that in the embodiments of the present disclosure, the base station in the NR system is just taken as an example, and the specific type of base station is not limited.

To enable person skilled in the art to better understand the embodiments of the present disclosure, the following explanation is provided.

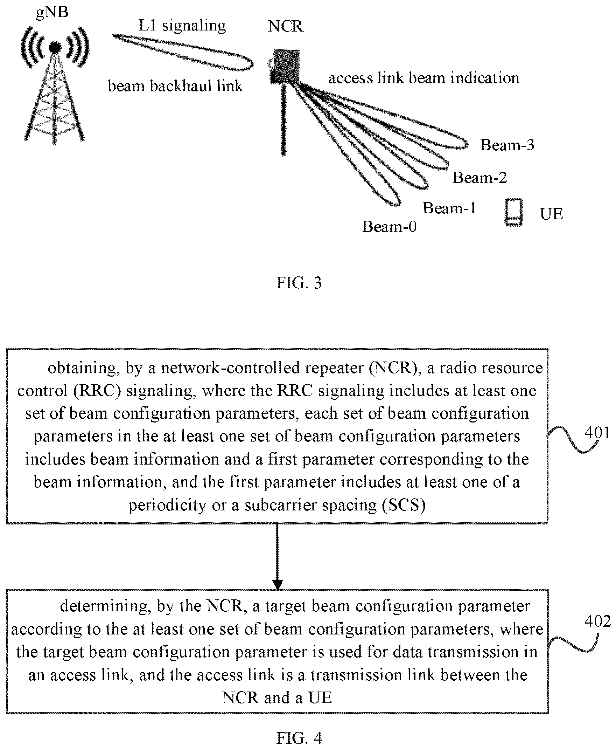

As shown in FIG. 3, it may be considered that a beam between a next generation node base station (next generation Node Base station, gNB) and an NCR is relatively stable and does not change. There may be multi-beam coverage in an access link between the NCR and UE; for broadcast signals, a direction of a beam from the NCR to the UE needs to be adjusted regularly so as to cover more areas. The beam indication is performed by the gNB. Specifically, the gNB uses a control signaling to indicate the beam periodically used by the NCR when forwarding a signal.

How to semi-statically indicate beam related information of the access link is a standard issue that needs to be discussed. Supporting semi static beam indication method has been discussed in the current technical specification, and the method is as follows.

For the semi-static (periodic) beam indication of the access link, a radio resource control (Radio Resource Control, RRC) configuration parameter is used to define a forwarding resource list with a length of X, which is configured in a form of {Beam index, time resource}, and the following rules are formulated:
parameters that a time resource needs to provide include a starting slot (configured by a slot offset within one period), a starting symbol (configured by a symbol offset within one slot), and a duration (configured by the number of symbols);
a periodicity length is configured by radio resource control (Radio Resource Control, RRC), and in a periodic beam indication, all time resources have the same periodicity length; and
a reference subcarrier spacing (Subcarrier Spacing, SCS) is configured by RRC, and in a periodic beam indication, all time resources have the same reference SCS.

The technical solution of embodiments of the present disclosure will be clearly and completely described hereinafter in conjunction with the accompanying drawings. Apparently, the described embodiments merely relate to a part of, rather than all of, the embodiments of the present disclosure, and according to the embodiments, a person of ordinary skill in the art may obtain other embodiments without creative effort, which shall also fall within the scope of the present disclosure.

As shown in FIG. 4, an embodiment of the present disclosure provides a method for determining a beam configuration parameter, including the following steps.

Step 401: obtaining, by a network controlled repeater (NCR), a radio resource control (RRC) signaling, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS).

Optionally, the NCR obtains the RRC signaling transmitted by a base station through a control link between the base station and an NCR-MT.

Optionally, after obtaining the RRC signaling mentioned above, the NCR feeds back ACK or NACK information on an uplink resource designated by the base station, and enables beam information at an effective time agreed with the base station.

Step 402: determining, by the NCR, a target beam configuration parameter according to the at least one set of beam configuration parameters, where the target beam configuration parameter is used for data transmission in an access link, and the access link is a transmission link between the NCR and a UE.

In an embodiment of the present disclosure, the network controlled repeater (NCR) obtains radio resource control (RRC) signaling, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS). The NCR determines a target beam configuration parameter according to the at least one set of beam configuration parameters, where the target beam configuration parameter is used for data transmission in an access link, and the access link is a transmission link between the NCR and a UE. With the above scheme, the objective of determining the beam configuration parameter of the access link is achieved.

Optionally, the beam information includes at least one of the following: beam index; or time resource set of a beam.

Optionally, the time resource set includes at least one of the following:
a first slot offset, where the first slot offset includes a slot offset of a starting slot of the periodicity relative to a starting position of a radio frame number;
a second slot offset, where the second slot offset includes a slot offset of a starting slot position of a time resource of the beam relative to a starting position of the periodicity;
starting symbol information, where the starting symbol information includes a symbol offset of a starting symbol position of a time resource of the beam relative to a starting slot within the periodicity; or
duration information, where the duration information includes a number of symbols corresponding to a length of a time resource of the beam.

Optionally, in an embodiment of the present disclosure, the length of the aforementioned periodicity may be configured using the following schemes:
scheme A1: a length of the periodicity is an integer multiple of a slot configuration in a time division duplexing (Time Division Duplexing, TDD) system; or
scheme A2: a length of the periodicity is an integer multiple of the periodicity of a synchronization signal/physical broadcast channel signal block (Synchronization Signal and PBCH block, SSB); or
scheme A3: a length of the periodicity is a configured candidate periodicity length.

In the above scheme A1, in an embodiment of the present disclosure, the base station configures a candidate duration set of a periodicity of the slot configuration in the TDD system by enumeration, and configures an index value to indicate the selected periodicity. The candidate duration set is configured as follows:
dl-UL-Transmission Periodicity ENUMERATED {ms0p5, ms0p625, ms1, ms1p25, ms2, ms2p5, ms5, ms10};
where if the index value is in a range of 0 to 7, then index 0 corresponds to 0.5ms, index 1 corresponds to 0.625ms, index 2 corresponds to 1ms, index 3 corresponds to 1.25ms, and so on.

The periodicity of the access link beam information configured by the base station is a multiple of dl-UL-TransmissionPeriodicity, such as {n1, n2, n4, n8}, indicating that the periodicity is 1, 2, 4, or 8 times dl-UL-TransmissionPeriodicity (TDD slot configuration period).

In the above scheme A2, in an embodiment of the present disclosure, the base station configures a candidate duration set of SSB periodicity by enumeration, and configures an index value to indicate a selected periodicity. The candidate duration set is configured as follows:
ssb-PeriodicityServingCell ENUMERATED {ms5, ms10, ms20, ms40, ms80, ms160};
where if the index value is within a range of 0 to 5, then index 0 corresponds to 5ms, index 1 corresponds to 10ms, index 2 corresponds to 20ms, and so on.

The periodicity of the access link beam information configured by the base station is a multiple of ssb-PeriodicityServingCell (an SSB periodicity of the serving cell), such as {n1, n2, n4, n8}, indicating that the periodicity is 1, 2, 4, or 8 times that of the ssb-PeriodicityServingCell.

In the above scheme A3, the base station configures a candidate duration set of the periodicity of the access link beam information by enumeration, and configures an index value to indicate a selected periodicity. The candidate duration set is configured as follows:
NCR-AccessBeamPeriodicity ENUMERATED {ms10, ms20, ms40, ms80, ms160};
where if the index value is within a range of 0 to 4, then index 0 corresponds to 10ms, index 1 corresponds to 20ms, index 2 corresponds to 40ms, and so on.

Optionally, the SCS is a first subcarrier spacing or a second subcarrier spacing; where the first subcarrier spacing is determined according to a subcarrier spacing corresponding to a frequency band of the access link; and the second subcarrier spacing is determined according to a subcarrier spacing corresponding to a frequency band of a control link, and the control link is a transmission link between the NCR and a base station.

In an embodiment of the present disclosure, the base station directly configures the SCS value. Specifically, the base station configures an SCS candidate set of the access link beam information in an enumeration manner, and configures an index value to indicate a selected SCS. The SCS candidate set is configured as follows:
NCR Access Subcarrier Spacing::=ENUMERATED {kHz15, kHz30, kHz60, kHz120, kHz240, kHz480-v1700, kHz960-v1700, spare1},
where the index value ranges from 0 to 7, then index 0 corresponds to 15kHz, index 1 corresponds to 30kHz, index 2 corresponds to 60kHz, and so on.

In an embodiment of the present disclosure, the base station configures the SCS value of the access link to be an integer multiple of the SCS value of the control link. Specifically, the base station configures the SCS candidate set (kHz) of the control link in an enumeration manner, and configures an index value to indicate a selected SCS. The method for configuring the SCS candidate set of the control link is as follows:
SubcarrierSpacing::=ENUMERATED {kHz15, kHz30, kHz60, kHz120, kHz240, kHz480-v1700, kHz960-v1700, spare1},
where the index value ranges from 0 to 7, then index 0 corresponds to 15kHz, index 1 corresponds to 30kHz, index 2 corresponds to 60kHz, and so on.

The SCS value of the access link configured by the base station is a multiple of SubcarrierSpacing, such as {n1, n2, n4, n8}, indicating that the SCS value is 1, 2, 4, or 8 times that of SubcarrierSpacing.

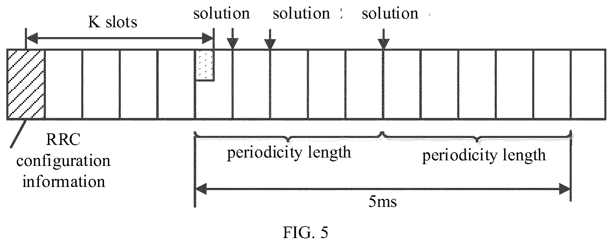

Optionally, as shown in FIG. 5, an effective time of the beam information includes any one of the following solution:
solution 1: a starting time of a target slot, where the target slot is a first slot among K1 slots located after a transmission slot of the RRC signaling or a first slot among K2 slots located after a transmission slot of feedback information of the RRC signaling, the feedback information of the RRC signaling includes an acknowledgement (Acknowledgement, ACK) or a negative acknowledgement (Negative Acknowledgement, NACK), and both K1 and K2 are positive integers;
solution 2: a starting time of a target subframe, where the target subframe is a first complete subframe located after a target slot, the target slot is a first slot among K1 slots located after a transmission slot of the RRC signaling or a first slot among K2 slots located after a transmission slot of feedback information of the RRC signaling; or
solution 3: a starting time of a target periodicity, where the target periodicity is a first complete periodicity located after a target slot, the target slot is a first slot among K1 slots located after a transmission slot of the RRC signaling or a first slot among K2 slots located after a transmission slot of feedback information of the RRC signaling.

Optionally, the RRC signaling includes a first RRC signaling and a second RRC signaling, the first RRC signaling includes a first configuration parameter, the second RRC signaling includes a second configuration parameter, an obtaining time of the second RRC signaling is later than an obtaining time of the first RRC signaling, the first configuration parameter includes at least one set of beam configuration parameters, and the second configuration parameter includes at least one set of beam configuration parameters.

As an optional implementation, the first configuration parameter includes one set of beam configuration parameters, and the second configuration parameter includes one set of beam configuration parameters; the determining, by the NCR, the target beam configuration parameter according to the at least one set of beam configuration parameters includes the following schemes:
Scheme C1: after obtaining the second RRC signaling, determining the one set of beam configuration parameters included in the second configuration parameter as the target beam configuration parameter; or
Scheme C2: after obtaining the second RRC signaling, determining the target beam configuration parameter according to a positional relationship between a time resource indicated by the first configuration parameter and a time resource indicated by the second configuration parameter.

Optionally, in the Scheme C2, the determining the target beam configuration parameter according to the positional relationship between the time resource indicated by the first configuration parameter and the time resource indicated by the second configuration parameter includes:
in a case that a first condition is met, determining the target beam configuration parameter according to the positional relationship between the time resource indicated by the first configuration parameter and the time resource indicated by the second configuration parameter; and/or,
in a case that the first condition is not met, determining the one set of beam configuration parameters included in the second configuration parameter as the target beam configuration parameter;
where the first condition includes at least one of the following:
   a periodicity in the first configuration parameter is the same as a periodicity in the second configuration parameter; or
   an SCS in the first configuration parameter is the same as an SCS in the second configuration parameter.

Optionally, in the above Scheme C2, the determining the target beam configuration parameter according to the positional relationship between the time resource indicated by the first configuration parameter and the time resource indicated by the second configuration parameter includes:
in a case that the time resource indicated by the first configuration parameter at least partially overlaps the time resource indicated by the second configuration parameter, determining the one set of beam configuration parameters included in the second configuration parameter as the target beam configuration parameter; or
in a case that the time resource indicated by the first configuration parameter does not overlap with the time resource indicated by the second configuration parameter, determining the one set of beam configuration parameters included in the first configuration parameter and the one set of beam configuration parameters included in the second configuration parameter as the target beam configuration parameter.

According to the above description, the implementation scheme may include not only the above-mentioned Scheme C1 and Scheme C2, but also the following schemes:
Scheme C3: in a case that the periodicity information in the first configuration parameter is the same as the periodicity information in the second configuration parameter, executing the Scheme C2; and in a case that the periodicity information in the first configuration parameter is different from the periodicity information in the second configuration parameter, determining the second configuration parameter as the target beam configuration parameter;
Scheme C4: in a case that the SCS in the first configuration parameter is the same as the SCS in the second configuration parameter, executing the Scheme C2; and in a case that the SCS in the first configuration parameter is different from the SCS in the second configuration parameter, determining the second configuration parameter as the target beam configuration parameter.

Scheme C5: in a case that the periodicity information in the first configuration parameter is the same as the periodicity information in the second configuration parameter, and the SCS in the first configuration parameter is the same as the SCS in the second configuration parameter, executing the above Scheme C2; and in a case that the periodicity information in the first configuration parameter is different from the periodicity information in the second configuration parameter, and/or in a case that the SCS in the first configuration parameter is different from the SCS in the second configuration parameter, then determining the second configuration parameter as the target beam configuration parameter.

The above Scheme C1 to Scheme C5 will be explained below in combination with specific implementation examples.

For the above Scheme C1 (the NCR supports one SCS and one period), the solution of the present disclosure specifically includes the following contents.
1. It is assumed that the RRC signaling configured by the base station is as shown in Table 1.

**Table 1**

| | periodicity | SCS | beam information |
|---|---|---|---|
| | | | {Beam index 1-1, time resource 1-1}; |
| first RRC signaling | Periodicity 1 | SCS 1 | {Beam index 1-2, time resource 1-2}; |
| | | | ... |
| | | | {Beam index 1-X, time resource 1-X}; |
| | | | {Beam index 2-1, time resource 2-1}; |
| second RRC signaling | Periodicity 2 | SCS 2 | {Beam index 2-2, time resource 2-2}; |
| | | | ... |
| | | | {Beam index 2-X, time resource 2-X}; |

2. After the first RRC signaling arrives, NCR configuration is as shown in Table 2.

**Table 2**

| | periodicity | SCS | beam information |
|---|---|---|---|
| | | | {Beam index 1-1, time resource 1-1}; |
| NCR configuration | Periodicity 1 | SCS 1 | {Beam index 1-2, time resource 1-2}; |
| | | | ... |
| | | | {Beam index 1-X, time resource 1-X}; |

3. After the second RRC signaling arrives, NCR configuration is as shown in Table 3.

**Table 3**

| | periodicity | SCS | beam information |
|---|---|---|---|
| | | | {Beam index 2-1, time resource 2-1}; |
| NCR configuration | Periodicity 2 | SCS 2 | {Beam index 2-2, time resource 2-2}; |
| | | | ... |
| | | | {Beam index 2-X, time resource 2-X}; |

For the aforementioned Scheme C2 (the NCR supports multiple periodicities and multiple SCSs), in the present disclosure specifically includes the following solutions.
1. It is assumed that the content of the RRC signaling configured by the base station is as shown in Table 4, where time resource 1-1 and time resource 2-1 overlap.

**Table 4**

| | periodicity | SCS | beam information |
|---|---|---|---|
| | | | {Beam index 1-1, time resource 1-1}; |
| first RRC signaling | Periodicity 1 | SCS 1 | {Beam index 1-2, time resource 1-2}; |
| | | | ... |
| | | | {Beam index 1-X, time resource 1-X}; |
| | | | {Beam index 2-1, time resource 2-1}; |
| second RRC signaling | Periodicity 2 | SCS 2 | {Beam index 2-2, time resource 2-2}; |
| | | | ... |
| | | | {Beam index 2-X, time resource 2-X}; |

2. After the first RRC signaling arrives, NCR configuration is as shown in Table 5.

**Table 5**

| | periodicity | SCS | beam information |
|---|---|---|---|
| | | | {Beam index 1-1, time resource 1-1}; |
| NCR configuration | Periodicity 1 | SCS 1 | {Beam index 1-2, time resource 1-2}; |
| | | | ... |
| | | | {Beam index 1-X, time resource 1-X}; |

3. After the second RRC signaling arrives, NCR configuration is as shown in Table 6.

**Table 6**

| periodicity | SCS | | beam information |
|---|---|---|---|
| Periodicity 1 | SCS 1 | | {Beam index 1-2, time resource 1-2}; |
| | | | ... |
| | | | {Beam index 1-X, time resource 1-X}; |
| NCR configuration | | | {Beam index 2-1, time resource 2-1}; |
| | Periodicity 2 | SCS 2 | {Beam index 2-2, time resource 2-2}; |
| | | | ... |
| | | | {Beam index 2-X, time resource 2-X}; |

For the aforementioned Scheme C3 (the NCR supports a single periodicity and multiple SCSs), the present disclosure specifically includes the following solutions.
1. It is assumed that the content of the RRC signaling configured by the base station is as shown in Table 7, where time resource 1-1 and time resource 2-1 overlap.

**Table 7**

| | periodicity | SCS | beam information |
|---|---|---|---|
| | | | {Beam index 1-1, time resource 1-1}; |
| first RRC signaling | Periodicity 1 | SCS 1 | {Beam index 1-2, time resource 1-2}; |
| | | | ... |
| | | | {Beam index 1-X, time resource 1-X}; |
| | | | {Beam index 2-1, time resource 2-1}; |
| second RRC signaling | Periodicity 2 | SCS 2 | {Beam index 2-2, time resource 2-2}; |
| | | | ... |
| | | | {Beam index 2-X, time resource 2-X}; |

2. The first RRC signaling arrives, NCR configuration is as shown in Table 8.

**Table 8**

| | periodicity | SCS | beam information |
|---|---|---|---|
| | | | {Beam index 1-1, time resource 1-1}; |
| NCR configuration | Periodicity 1 | SCS 1 | {Beam index 1-2, time resource 1-2}; |
| | | | ... |
| | | | {Beam index 1-X, time resource 1-X}; |

3. The second RRC signaling arrives, if Periodicity 1 and Periodicity 2 are not consistent, NCR configuration is as shown in Table 9.

**Table 9**

| | periodicity | SCS | beam information |
|---|---|---|---|
| | | | {Beam index 2-1, time resource 2-1}; |
| NCR configuration | Periodicity 2 | SCS 2 | {Beam index 2-2, time resource 2-2}; |
| | | | ... |
| | | | {Beam index 2-X, time resource 2-X}; |

After the second RRC signaling arrives, if Periodicity 1 and Periodicity 2 are consistent, NCR configuration is as shown in Table 10.

**Table 10**

| | periodicity | SCS | beam information |
|---|---|---|---|
| NCR configuration | Periodicity 1 | SCS 1 | {Beam index 1-2, time resource 1-2}; |
| | | | ... |
| | | | {Beam index 1-X, time resource 1-X}; |
| | | SCS 2 | {Beam index 2-1, time resource 2-1}; |
| | | | {Beam index 2-2, time resource 2-2}; |
| | | | ... |
| | | | {Beam index 2-X, time resource 2-X}; |

For the above-mentioned Scheme C4 (the NCR supports multiple periodicities and one SCS), the specific scheme of the present disclosure is as follows.
1. It is assumed that the content of the RRC signaling configured by the base station is as shown in Table 11, where time resource 1-1 and time resource 2-1 overlap:

**Table 11**

| | periodicity | SCS | beam information |
|---|---|---|---|
| | | | {Beam index 1-1, time resource 1-1}; |
| first RRC signaling | Periodicity 1 | SCS 1 | {Beam index 1-2, time resource 1-2}; |
| | | | ... |
| | | | {Beam index 1-X, time resource 1-X}; |
| second RRC signaling | Periodicity 2 | SCS 2 | {Beam index 2-1, time resource 2-1}; |
| | | | {Beam index 2-2, time resource 2-2}; |
| ... | | | |
| {Beam index 2-X, time resource 2-X}; | | | |

2. After the first RRC signaling arrives, the NCR configuration is as shown in Table 12.

**Table 12**

| | periodicity | SCS | beam information |
|---|---|---|---|
| NCR configuration | Periodicity 1 | SCS 1 | {Beam index 1-1, time resource 1-1}; |
| | | | {Beam index 1-2, time resource 1-2}; |
| | | | ... |
| | | | {Beam index 1-X, time resource 1-X}; |

3. After the second RRC signaling arrives, if SCS 1 and SCS 2 are not consistent, the NCR configuration is as shown in Table 13.

**Table 13**

| | periodicity | SCS | beam information |
|---|---|---|---|
| NCR configuration | Periodicity 2 | SCS 2 | {Beam index 2-1, time resource 2-1}; |
| | | | {Beam index 2-2, time resource 2-2}; |
| | | | ... |
| | | | {Beam index 2-X, time resource 2-X}; |

After the second RRC signaling arrives, if SCS 1 and SCS 2 are consistent, the NCR configuration is as shown in Table 14.

**Table 14**

| | periodicity | SCS | beam information |
|---|---|---|---|
| NCR configuration | Periodicity 1 | SCS 1 | {Beam index 1-2, time resource 1-2}; |
| | | | ... |
| | | | {Beam index 1-X, time resource 1-X}; |
| | Periodicity 2 | | {Beam index 2-1, time resource 2-1}; |
| | | | {Beam index 2-2, time resource 2-2}; |
| | | | ... |
| | | | {Beam index 2-X, time resource 2-X}; |

For the above-mentioned Scheme C5 (the NCR supports one periodicity and one SCS), the present disclosure specifically includes the following schemes.
1. It is assumed that the content of the RRC signaling configured by the base station is as shown in Table 15, where time resource 1-1 and time resource 2-1 overlap.

**Table 15**

| | periodicity | SCS | beam information |
|---|---|---|---|
| first RRC signaling | Periodicity 1 | SCS 1 | {Beam index 1-1, time resource 1-1}; |
| | | | {Beam index 1-2, time resource 1-2}; |
| | | | ... |
| | | | {Beam index 1-X, time resource 1-X}; |
| second RRC signaling | Periodicity 2 | SCS 2 | {Beam index 2-1, time resource 2-1}; |
| | | | {Beam index 2-2, time resource 2-2}; |
| | | | ... |
| | | | {Beam index 2-X, time resource 2-X}; |

2. After the first RRC signaling arrives, NCR configuration is as shown in Table 16.

**Table 16**

| | periodicity | SCS | beam information |
|---|---|---|---|
| NCR configuration | Periodicity 1 | SCS 1 | {Beam index 1-1, time resource 1-1}; |
| | | | {Beam index 1-2, time resource 1-2}; |
| | | | ... |
| | | | {Beam index 1-X, time resource 1-X}; |

3. After the second RRC signaling arrives, if Periodicity 1 and Periodicity 2 are not consistent, or SCS 1 and SCS 2 are not consistent, NCR configuration is as shown in Table 17.

**Table 17**

| | periodicity | SCS | beam information |
|---|---|---|---|
| NCR configuration | Periodicity 2 | SCS 2 | {Beam index 2-1, time resource 2-1}; |
| | | | {Beam index 2-2, time resource 2-2}; |
| | | | ... |
| | | | {Beam index 2-X, time resource 2-X}; |

After the second RRC signaling arrives, if Periodicity 1 and Periodicity 2 are consistent, and SCS 1 and SCS 2 are consistent, NCR configuration is as shown in Table 18.

**Table 18**

| | periodicity | SCS | beam information |
|---|---|---|---|
| NCR configuration | Periodicity 1 | SCS 1 | {Beam index 1-2, time resource 1-2}; |
| | | | ... |
| | | | {Beam index 1-X, time resource 1-X}; |
| | | | {Beam index 2-1, time resource 2-1}; |
| | | | {Beam index 2-2, time resource 2-2}; |
| | | | ... |
| | | | {Beam index 2-X, time resource 2-X}; |

Optionally, in an embodiment of the present disclosure, priority parameter configuration may also be performed in the RRC signaling. For example, a type parameter is added into the RRC signaling, where UE-specific is used to represent user specific beam information, cell-specific is used to represent common information, a priority of the UE-specific lower than a priority of the cell-specific; or a priority (Priority) related parameter is added into RRC configuration; or different RRC signaling names are used to represent configured beam types, where different beam types correspond to different priorities.

Optionally, the first RRC signaling further includes first priority indication information; the second RRC signaling further includes second priority indication information; where the first priority indication information is used to indicate that a priority of the first configuration parameter is a first priority, and the second priority indication information is used to indicate that a priority of the second configuration parameter is a second priority.

The first priority indication information or the second priority indication information may be the type parameter, the priority parameter, or the beam type mentioned above.

Optionally, the first configuration parameter includes one set of beam configuration parameters, and the second configuration parameter includes one set of beam configuration parameters; the determining, by the NCR, the target beam configuration parameter according to the at least one set of beam configuration parameters includes:
in a case that a second condition is met, for a first time resource, determining one set of beam configuration parameters included by a configuration parameter corresponding to a target priority as the target beam configuration parameter, and for a second time resource, determining the one set of beam configuration parameters included in the first configuration parameter and the one set of beam configuration parameters included in the second configuration parameter as the target beam configuration parameter, where the target priority is a higher priority of the first priority and the second priority; and/or,
in a case that the second condition is not met, determining the one set of beam configuration parameters included in the first configuration parameter and the one set of beam configuration parameters included in the second configuration parameter as the target configuration parameter;
where the second condition includes any one of the following:
   a time resource indicated by the first configuration parameter at least partially overlaps a time resource indicated by the second configuration parameter;
   a periodicity in the first configuration parameter is the same as a periodicity in the second configuration parameter, and a time resource in the first configuration parameter at least partially overlaps a time resource in the second configuration parameter;
   an SCS in the first configuration parameter is the same as an SCS in the second configuration parameter, and a time resource in the first configuration parameter at least partially overlaps a time resource in the second configuration parameter; or
   an SCS in the first configuration parameter is the same as an SCS in the second configuration parameter, a periodicity in the first configuration parameter is the same as a periodicity in the second configuration parameter, and a time resource in the first configuration parameter at least partially overlaps a time resource in the second configuration parameter,
   where the first time resource is an overlapping time resource between the time resource indicated by the first configuration parameter and the time resource indicated by the second configuration parameter; and
   the second time resource is a time resource of the time resource indicated by the first configuration parameter and the time resource indicated by the second configuration parameter excluding the first time resource.

According to the above description, the implementation method includes the following solutions.

Scheme C6: the NCR compares time resources indicated by the time resource set in the second RRC signaling and the first RRC signaling, and if the time resources overlap or partially overlap, the NCR determines whether to use a beam configuration parameter in the second RRC signaling according to the priority indication information. If a priority indicated by the first RRC signaling is greater than a priority indicated by the second RRC signaling, the beam configuration parameter of the first RRC signaling are still used in the overlapping area; if the priority indicated by the first RRC signaling is less than or equal to the priority indicated by the second RRC signaling, the beam configuration parameter of the second RRC signaling is used in the overlapping area. For non-overlapping time resources, a collection of beam configuration parameters from the first RRC signaling and the second RRC signaling is used;
Scheme C7: the NCR compares Periodicities of configuration parameters of the second RRC signaling and the first RRC signaling, and if the Periodicities are inconsistent, the NCR determines whether to use the beam configuration parameter in the second RRC signaling according to the priority indication information. If a priority indicated by the first RRC signaling is greater than a priority indicated by the second RRC signaling, the beam configuration parameter of the first RRC signaling is used; and if the priority indicated by the first RRC signaling is less than or equal to the priority indicated by the second RRC signaling, the beam configuration parameter of the second RRC signaling is used. If the Periodicities are consistent, then the Scheme C6 is executed.

Scheme C8: the NCR compares SCSs of configuration parameters in the second RRC signaling and the first RRC signaling, and if the SCSs are inconsistent, the NCR determines whether to use the beam configuration parameters in the second RRC signaling according to the priority indication information. If a priority indicated by the first RRC signaling is greater than a priority indicated by the second RRC signaling, the beam configuration parameter of the first RRC signaling is used; and if the priority indicated by the first RRC signaling is less than or equal to the priority indicated by the second RRC signaling, the beam configuration parameter of the second RRC signaling is used. If the SCSs are consistent, then the Scheme C6 is executed.

Scheme C9: the NCR compares Periodicities and SCSs of configuration parameters in the second RRC signaling and the first RRC signaling, and if the Periodicities and the SCSs in two signaling signals are not completely consistent, then the NCR determines whether to use the beam configuration parameter in the second RRC signaling according to the priority indication information. If a priority indicated by the first RRC signaling is greater than a priority indicated by the second RRC signaling, the beam configuration parameter of the first RRC signaling is used; if the priority of the first RRC signaling is less than or equal to the priority indicated by the second RRC signaling, the beam configuration parameter of the second RRC signaling is used. If Periodicities and the SCSs in two signaling signals are completely consistent, then the Scheme C6 is executed.

The above Scheme C6 to Scheme C9 will be explained below in combination with specific implementation examples.

For the above-mentioned Scheme C6 (the NCR supports multiple periods and multiple SCSs), the present disclosure specifically includes the following solutions.

It is assumed that the content of the RRC signaling configured by the base station is shown in Table 19, where there is an overlap between time resource 1-1 and time resource 2-1.

**Table 19**

| | periodicity | SCS | beam information | priority |
|---|---|---|---|---|
| first RRC signaling | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |
| second RRC signaling | Periodicity 2 | SCS 2 | {Beam index 2-1, time resource 2-1}; | Priority 2 |
| | | | {Beam index 2-2, time resource 2-2}; | |
| | | | ... | |
| | | | {Beam index 2-X, time resource 2-X}; | |

2. After the first RRC signaling arrives, NCR configuration is as shown in Table 20.

**Table 20**

| periodicity | SCS | | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |

3. After the second RRC signaling arrives, if Priority 1 is greater than Priority 2, NCR configuration is as shown in Table 21.

**Table 21**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | Periodicity 2 | SCS 2 | {Beam index 1-X, time resource 1-X}; | Priority 2 |
| | | | {Beam index 2-2, time resource 2-2}; | |
| | | | ... | |
| | | | {Beam index 2-X, time resource 2-X}; | |

After the second RRC signaling arrives, if Priority 1 is less than or equal to Priority 2, NCR configuration is as shown in Table 22.

**Table 22**

| | periodicity | SCS | beam information | priority |
|---|---|---|---|---|
| NCR configuration | Periodicity 1 | SCS 1 | {Beam index 1-2, time resource 1-2}; | Priority 1 |
| | | | ... | |
| | | | {Beam index 1-X, time resource 1-X}; | |
| | Periodicity 2 | SCS 2 | {Beam index 2-1, time resource 2-1}; | Priority 2 |
| | | | {Beam index 2-2, time resource 2-2}; | |
| | | | ... | |
| | | | {Beam index 2-X, time resource 2-X}; | |

For the aforementioned Scheme C7 (the NCR supports one periodicity and multiple SCSs), in the present disclosure specifically includes the following solutions.
1. It is assumed that the content of the RRC signaling configured by the base station is as shown in Table 23, where time resource 1-1 and time resource 2-1 overlap.

**Table 23**

| | periodicity | SCS | beam information | priority |
|---|---|---|---|---|
| first RRC signaling | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |
| second RRC signaling | Periodicity 2 | SCS 2 | {Beam index 2-1, time resource 2-1}; | Priority 2 |
| | | | {Beam index 2-2, time resource 2-2}; | |
| | | | ... | |
| | | | {Beam index 2-X, time resource 2-X}; | |

2. After the first RRC signaling arrives, NCR configuration is as shown in Table 24.

**Table 24**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |

3. After the second RRC signaling arrives, if Priority 1 is greater than Priority 2, and periodicities are not consistent, NCR configuration is as shown in Table 25.

**Table 25**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |

After the second RRC signaling arrives, if Priority 1 is greater than Priority 2, and periodicities are consistent, NCR configuration is as shown in Table 26.

**Table 26**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | | SCS 2 | {Beam index 1-X, time resource 1-X}; | Priority 2 |
| | | | {Beam index 2-2, time resource 2-2}; | |
| | | | ... | |
| | | | {Beam index 2-X, time resource 2-X}; | |

After the second RRC signaling arrives, if Priority 1 is less than or equal to Priority 2, and Periodicity 1 and Periodicity 2 are not consistent, NCR configuration is as shown in Table 27.

**Table 27**

| | periodicity | SCS | beam information | priority |
|---|---|---|---|---|
| | | | {Beam index 2-1, time resource 2-1}; | |
| NCR configuration | Periodicity 2 | SCS 2 | {Beam index 2-2, time resource 2-2}; | Priority 2 |
| | | | ... | |
| | | | {Beam index 2-X, time resource 2-X}; | |

After the second RRC signaling arrives, if Priority 1 is less than or equal to Priority 2, and Periodicity 1 and Periodicity 2 are consistent, NCR configuration is as shown in Table 28.

**Table 28**

| | periodicity | SCS | beam information | priority |
|---|---|---|---|---|
| NCR configuration | Periodicity 1 | SCS 1 | {Beam index 1-2, time resource 1-2}; | Priority 1 |
| | | | ... | |
| | {Beam index 1-X, time resource 1-X}; | | | |
| | {Beam index 2-1, time resource 2-1}; | | | |
| SCS 2 | {Beam index 2-2, time resource 2-2}; | | Priority 2 | |
| | ... | | | |
| | {Beam index 2-X, time resource 2-X}; | | | |

For the aforementioned Scheme C8 (the NCR supports multiple periodicities and one SCS), in the present disclosure specifically includes the following solutions.
1. It is assumed that the content of the RRC signaling configured by the base station is as shown in Table 29, where time resource 1-1 and time resource 2-1 overlap.

**Table 29**

| | periodicity | SCS | beam information | priority |
|---|---|---|---|---|
| | | | {Beam index 1-1, time resource 1-1}; | |
| first RRC signaling | Periodicity 1 | SCS 1 | {Beam index 1-2, time resource 1-2}; | Priority 1 |
| | | | ... | |
| | | | {Beam index 1-X, time resource 1-X}; | |
| | | | {Beam index 2-1, time resource 2-1}; | |
| second RRC signaling | Periodicity 2 | SCS 2 | {Beam index 2-2, time resource 2-2}; | Priority 2 |
| | | | ... | |
| | | | {Beam index 2-X, time resource 2-X}; | |

2. After the first RRC signaling arrives, NCR configuration is as shown in Table 30.

**Table 30**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |

3. After the second RRC signaling arrives, if Priority 1 is greater than Priority 2, and SCSs are not consistent, NCR configuration is as shown in Table 31.

**Table 31**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |

After the second RRC signaling arrives, if Priority 1 is greater than Priority 2, and SCSs are consistent, NCR configuration is as shown in Table 32.

**Table 32**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |
| | Periodicity 2 | | {Beam index 2-2, time resource 2-2}; | Priority 2 |
| | | | ... | |
| | | | {Beam index 2-X, time resource 2-X}; | |

After the second RRC signaling arrives, if Priority 1 is less than or equal to Priority 2, and SCS 1 and SCS 2 are not consistent, NCR configuration is as shown in Table 33.

**Table 33**

| | periodicity | SCS | beam information | priority |
|---|---|---|---|---|
| NCR configuration | Periodicity 2 | SCS 2 | {Beam index 2-1, time resource 2-1}; | Priority 2 |
| | | | {Beam index 2-2, time resource 2-2}; | |
| | | | ... | |
| | | | {Beam index 2-X, time resource 2-X}; | |

After the second RRC signaling arrives, if Priority 1 is less than or equal to Priority 2, and SCS 1 and SCS 2 are consistent, NCR configuration is as shown in Table 34.

**Table 34**

| periodicity | | SCS | beam information | priority |
|---|---|---|---|---|
| NCR configuration | Periodicity 1 | SCS 1 | {Beam index 1-2, time resource 1-2}; | Priority 1 |
| | | | ... | |
| | | | {Beam index 1-X, time resource 1-X}; | |
| | Periodicity 2 | | {Beam index 2-1, time resource 2-1}; | Priority 2 |
| | | | {Beam index 2-2, time resource 2-2}; | |
| | | | ... | |
| | | | {Beam index 2-X, time resource 2-X}; | |

For the aforementioned Scheme C9 (the NCR supports one periodicity and one SCS), in the present disclosure specifically includes the following solutions.
1. It is assumed that the content of the RRC signaling configured by the base station is as shown in Table 35, where time resource 1-1 and time resource 2-1 overlap.

**Table 35**

| | periodicity | SCS | beam information | priority |
|---|---|---|---|---|
| first RRC signaling | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |
| second RRC signaling | Periodicity 2 | SCS 2 | {Beam index 2-1, time resource 2-1}; | Priority 2 |
| | | | {Beam index 2-2, time resource 2-2}; | |
| | | | ... | |
| | | | {Beam index 2-X, time resource 2-X}; | |

2. After the first RRC signaling arrives, NCR configuration is as shown in Table 36.

**Table 36**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| {Beam index 1-X, time resource 1-X}; | | | | |

3. After the second RRC signaling arrives, if Priority 1 is greater than Priority 2, and Periodicity 1 and Periodicity 2 are not consistent, or SCS 1 and SCS 2 are not consistent, NCR configuration is as shown in Table 37.

**Table 37**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |

After the second RRC signaling arrives, if Priority 1 is greater than Priority 2, and Periodicity 1 and Periodicity 2 are consistent, or SCS 1 and SCS 2 are consistent, NCR configuration is as shown in Table 38.

**Table 38**

| | periodicity | SCS | beam information | priority |
|---|---|---|---|---|
| NCR configuration | Periodicity 1 | SCS 1 | {Beam index 1-1, time resource 1-1}; | Priority 1 |
| | | | {Beam index 1-2, time resource 1-2}; | |
| | | | ... | |
| | | | {Beam index 1-X, time resource 1-X}; | |
| | | | {Beam index 2-2, time resource 2-2}; | Priority 2 |
| | | | ... | |
| | | | {Beam index 2-X, time resource 2-X}; | |

After the second RRC signaling arrives, if Priority 1 is less than or equal to Priority 2, and Periodicity 1 and Periodicity 2 are not consistent, or SCS 1 and SCS 2 are not consistent, NCR configuration is as shown in Table 39.

**Table 39**

| | periodicity | SCS | beam information | priority |
|---|---|---|---|---|
| NCR configuration | Periodicity 2 | SCS 2 | {Beam index 2-1, time resource 2-1}; | Priority 2 |
| {Beam index 2-2, time resource 2-2}; | | | | |
| ... | | | | |
| {Beam index 2-X, time resource 2-X}; | | | | |

After the second RRC signaling arrives, if Periodicity 1 and Periodicity 2 are consistent, or SCS 1 and SCS 2 are consistent, NCR configuration is as shown in Table 40.

**Table 40**

| | periodicity | SCS | beam information | priority |
|---|---|---|---|---|
| NCR configuration | Periodicity 1 | SCS 1 | {Beam index 1-2, time resource 1-2}; | Priority 1 |
| | | | ... | |
| | | | {Beam index 1-X, time resource 1-X} | |
| | | | {Beam index 2-1, time resource 2-1}; | Priority 2 |
| | | | {Beam index 2-2, time resource 2-2}; | |
| | | | ... | |
| | | | {Beam index 2-X, time resource 2-X}; | |

Optionally, in an embodiment of the present disclosure, one RRC signaling may configure one or more sets of RRC beam configuration parameters, each set of configuration parameters may be represented in a form of a configuration list, that is, there is an index value of the configuration list in the RRC signaling (which may also be described as a group index value of a set of beam parameters), and the list index may be determined according to the type of information transmitted. For example, a list index of UE specific beam information is 1, a list index of cell specific beam information is 2, and there is only one Periodic and one SCS in a list.

Optionally, the first RRC signaling further includes first index information, and the second RRC signaling further includes second index information; where the first index information includes an index corresponding to each set of beam configuration parameters in the first configuration parameter, and the second index information includes an index corresponding to each set of beam configuration parameters in the second configuration parameter.

Optionally, in one implementation of the present disclosure, the first configuration parameter includes at least one set of beam configuration parameters, and the second configuration parameter includes at least one set of beam configuration parameters; the determining, by the NCR, the target beam configuration parameter according to the at least one set of beam configuration parameters includes:
in a case that a first index corresponding to a first set of beam configuration parameters in the first configuration parameter is different from a second index corresponding to a second set of beam configuration parameters in the second configuration parameter, determining the first set of beam configuration parameters corresponding to the first index and the second set of beam configuration parameters corresponding to the second index as the target beam configuration parameter; or,
in a case that a first index corresponding to a first set of beam configuration parameters in the first configuration parameter is the same as a second index corresponding to a second set of beam configuration parameters in the second configuration parameter, determining the second set of beam configuration parameters as a target beam configuration parameter corresponding to the first index;
where the third condition includes one or more of the following:
   a periodicity in the first set of beam configuration parameters and a periodicity in the second set of beam configuration parameters are the same or different; or
   an SCS in the first set of beam configuration parameters and an SCS in the second set of beam configuration parameters are the same or different,
   where the first set of beam configuration parameters is any one set of beam configuration parameters in the at least one set of beam configuration parameters included in the first configuration parameter, and the second set of beam configuration parameters is any one of the beam configuration parameters in at least one set of beam configuration parameters included in the second configuration parameter.

Optionally, the determining the target beam configuration parameter corresponding to the first index according to the third condition includes:
in a case that the periodicity in the first set of beam configuration parameters is the same as the periodicity in the second set of beam configuration parameters, the SCS in the first set of beam configuration parameters is the same as the SCS in the second set of beam configuration parameters, and a time resource indicated by the first set of beam configuration parameters at least partially overlaps a time resource indicated by the second set of beam configuration parameters, for a third time resource, determining the second set of beam configuration parameters as the target beam configuration parameter corresponding to the first index, and for a fourth time resource, determining the first set of beam configuration parameters and the second set of beam configuration parameters as the target beam configuration parameter corresponding to the first index, where the third time resource is an overlapping time resource between the time resource indicated by the first set of beam configuration parameters and the time resource indicated by the second set of beam configuration parameters, and the fourth time resource is a time resource of the time resource indicated by the first set of beam configuration parameters and the time resource indicated by the second set of beam configuration parameters excluding the third time resource; and
in a case that the periodicity in the first set of configuration parameters is different from the periodicity in the second set of configuration parameters, and/or the SCS in the first set of configuration parameters is different from the SCS in the second set of configuration parameters, taking the second set of beam configuration parameters as the target beam configuration parameter corresponding to the first index.

Optionally, the first configuration parameter includes at least one set of beam configuration parameters, and the second configuration parameter includes at least one set of beam configuration parameters; and the determining, by the NCR, the target beam configuration parameter according to the at least one set of beam configuration parameters includes: in a case that a third index corresponding to the third set of beam configuration parameters in the first configuration parameter is different from an index corresponding to the fourth set of beam configuration parameters in the second configuration parameter, determining the third set of beam configuration parameters as the target beam configuration parameter corresponding to the third index.

According to the above description, the corresponding solutions for the above implementation methods include the following:
Scheme C10: the NCR compares index values in the second RRC signaling and the first RRC signaling, performs configuration for parameters with the same index value by using the second RRC signaling, and performs configuration for parameters with different index values by using the second RRC signaling;
Scheme C11: the NCR compares index values in the second RRC signaling and the first RRC signaling, if the index values are the same, execute the Scheme C5, if the index values are different, and performs configuration for parameters with different index values by using the first RRC signaling.

For the above Scheme C10, the method in the embodiment of the present disclosure includes the following solutions.
1. It is assumed that the content of the RRC signaling configured by the base station is as shown in Table 41.

**Table 41**

| | inde x | periodicity | SCS | beam information |
|---|---|---|---|---|
| first RRC signaling | 1 | Periodicity 1-1 | SCS 1-1 | {Beam index 1-1-1, time resource 1-1-1}; |
| | | | | {Beam index 1-1-2, time resource 1-1-2}; |
| | | | | ... |
| | 2 | Periodicity 1-2 | SCS 1-2 | {Beam index 1-1-X, time resource 1-1-X}; |
| | | | | {Beam index 1-2-1, time resource 1-2-1}; |
| | | | | {Beam index 1-2-2, time resource 1-2-2}; |
| | | | | ... |
| | | | | {Beam index 1-2-X, time resource 1-2-X}; |
| second RRC signaling | 1 | Periodicity 2-1 | SCS 2-1 | {Beam index 2-1-1, time resource 2-1-1}; |
| | | | | {Beam index 2-1-2, time resource 2-1-2}; |
| | | | | ... |
| | | | | {Beam index 2-1-X, time resource 2-1-X}; |

2. After the first RRC signaling arrives, NCR configuration is as shown in Table 42.

**Table 42**

| | index | periodicity | SCS | beam information |
|---|---|---|---|---|
| NCR configuration | 1 | Periodicity 1-1 | SCS 1-1 | {Beam index 1-1-1, time resource 1-1-1}; |
| | | | {Beam index 1-1-2, time resource 1-1-2}; | |
| | | | ... | |
| | | | {Beam index 1-1-X, time resource 1-1-X}; | |
| 2 | Periodicity 1-2 | SCS 1-2 | {Beam index 1-2-1, time resource 1-2-1}; | |
| | | | {Beam index 1-2-2, time resource 1-2-2}; | |
| | | | ... | |
| | | | {Beam index 1-2-X, time resource 1-2-X}; | |

3. After the second RRC signaling arrives, NCR configuration is as shown in Table 43.

**Table 43**

| | index | periodicity | SCS | beam information |
|---|---|---|---|---|
| NCR configuration | 1 | Periodicity 2-1 | SCS 2-1 | {Beam index 2-1-1, time resource 2-1-1}; |
| | | | | {Beam index 2-1-2, time resource 2-1-2}; |
| | | | | ... |
| | | | | {Beam index 2-1-X, time resource 2-1-X}; |
| | 2 | Periodicity 1-2 | SCS 1-2 | {Beam index 1-2-1, time resource 1-2-1}; |
| | | | | {Beam index 1-2-2, time resource 1-2-2}; |
| | | | | ... |
| | | | | {Beam index 1-2-X, time resource 1-2-X}; |

For the above Scheme C11, the method in the embodiment of the present disclosure includes the following solutions.
1. It is assumed that the content of the RRC signaling configured by the base station is shown in Table 44, where there is an overlap between time resource 1-1 and time resource 2-1.

**Table 44**

| | Table index | periodicity | SCS | beam information |
|---|---|---|---|---|
| first RRC signaling | 1 | Periodicity 1-1 | SCS 1-1 | {Beam index 1-1-1, time resource 1-1-1}; |
| | | | | {Beam index 1-1-2, time resource 1-1-2}; |
| | | | | ... |
| | | | | {Beam index 1-1-X, time resource 1-1-X}; |
| | 2 | Periodicity 1-2 | SCS 1-2 | {Beam index 1-2-1, time resource 1-2-1}; |
| | | | | {Beam index 1-2-2, time resource 1-2-2}; |
| | | | | ... |
| | | | | {Beam index 1-2-X, time resource 1-2-X}; |
| second RRC signaling | 1 | Periodicity 2-1 | SCS 2-1 | {Beam index 2-1-1, time resource 2-1-1}; |
| | | | | {Beam index 2-1-2, time resource 2-1-2}; |
| | | | | ... |
| | | | | {Beam index 2-1-X, time resource 2-1-X}; |

2. After the first RRC signaling arrives, NCR configuration is as shown in Table 45.

**Table 45**

| | index | periodicity | SCS | beam information |
|---|---|---|---|---|
| NCR configuration | 1 | Periodicity 1-1 | SCS 1-1 | {Beam index 1-1-1, time resource 1-1-1}; |
| | | | | {Beam index 1-1-2, time resource 1-1-2}; |
| | | | | ... |
| | | | | {Beam index 1-1-X, time resource 1-1-X}; |
| | 2 | Periodicity 1-2 | SCS 1-2 | {Beam index 1-2-1, time resource 1-2-1}; |
| | | | | {Beam index 1-2-2, time resource 1-2-2}; |
| | | | | ... |
| | | | | {Beam index 1-2-X, time resource 1-2-X}; |

3. After the second RRC signaling arrives, if Periodicity 1-1 and Periodicity 2-1 are not consistent, and SCS 1 and SCS 2 are not consistent, NCR configuration is as shown in Table 46.

**Table 46**

| | index | periodicity | SCS | beam information |
|---|---|---|---|---|
| NCR configuration | 1 | Periodicity 2-1 | SCS 2-1 | {Beam index 2-1-1, time resource 2-1-1}; |
| | | | | {Beam index 2-1-2, time resource 2-1-2}; |
| | | | | ... |
| | | | | {Beam index 2-1-X, time resource 2-1-X}; |
| 2 | Periodicity 1-2 | SCS 1-2 | {Beam index 1-2-1, time resource 1-2-1}; | |
| | | | {Beam index 1-2-2, time resource 1-2-2}; | |
| | | | ... | |
| | | | {Beam index 1-2-X, time resource 1-2-X}; | |

After the second RRC signaling arrives, if Periodicity 1-1 and Periodicity 2-1 are consistent, and SCS 1 and SCS 2 are consistent, NCR configuration is as shown in Table 47.

**Table 47**

| | index | periodicity | SCS | beam information |
|---|---|---|---|---|
| NCR configuration | 1 | Periodicity 1-1 | SCS 1-1 | {Beam index 1-1-2, time resource 1-1-2}; |
| | | | | ... |
| | | | | {Beam index 1-1-X, time resource 1-1-X}; |
| | | | | {Beam index 2-1-1, time resource 2-1-1}; |
| | | | | {Beam index 2-1-2, time resource 2-1-2}; |
| | | | | ... |
| | | | | {Beam index 2-1-X, time resource 2-1-X}; |
| | 2 | Periodicity 1-2 | SCS 1-2 | {Beam index 1-2-1, time resource 1-2-1}; |
| | | | | {Beam index 1-2-2, time resource 1-2-2}; |
| | | | | ... |
| | | | | {Beam index 1-2-X, time resource 1-2-X}; |

Optionally, the determining, by the NCR, the target beam configuration parameter according to the at least one set of beam configuration parameters includes:
in a case that a fifth time resource indicated by at least one set of beam configuration parameters in the RRC signaling at least partially overlaps a sixth time resource indicated by a beam configuration parameter in a downlink control information (DCI), determining the target beam configuration parameter according to a first rule, a second rule or a third rule,
where the first rule includes: for an overlapping resource, determining the target beam configuration parameter according to the at least one set of beam configuration parameters in the RRC signaling; for a resource in the fifth time resource excluding the overlapping resource, determining the target beam configuration parameter according to the at least one set of beam configuration parameters in the RRC signaling; and for a resource in the sixth time resource excluding the overlapping resource, determining the target beam configuration parameter according to the beam configuration parameter in the DCI;
the second rule includes: for an overlapping resource, determining the target beam configuration parameter according to the at least one set of beam configuration parameters in the RRC signaling; and for a first target time resource, determining a beam configuration parameter of the first target time resource according to a part of the beam configuration parameter in the DCI, where the part of the beam configuration parameter in the DCI is a beam configuration parameter of a second target time resource, the second target time resource is a time resource in the sixth time resource excluding for a time resource before the overlapping resource, the first target time resource is a resource located after the overlapping resource, and a resource length corresponding to the first target time resource is the same as a resource length corresponding to the second target time resource;
the third rule includes: for an overlapping resource, determining the target beam configuration parameter according to the beam configuration parameter in the DCI; for a resource in the fifth time resource excluding the overlapping resource, determining the target beam configuration parameter according to the at least one set of beam configuration parameters in the RRC signaling; and for a resource in the sixth time resource excluding the overlapping resource, determining the target beam configuration parameter according to the beam configuration parameter in the DCI.

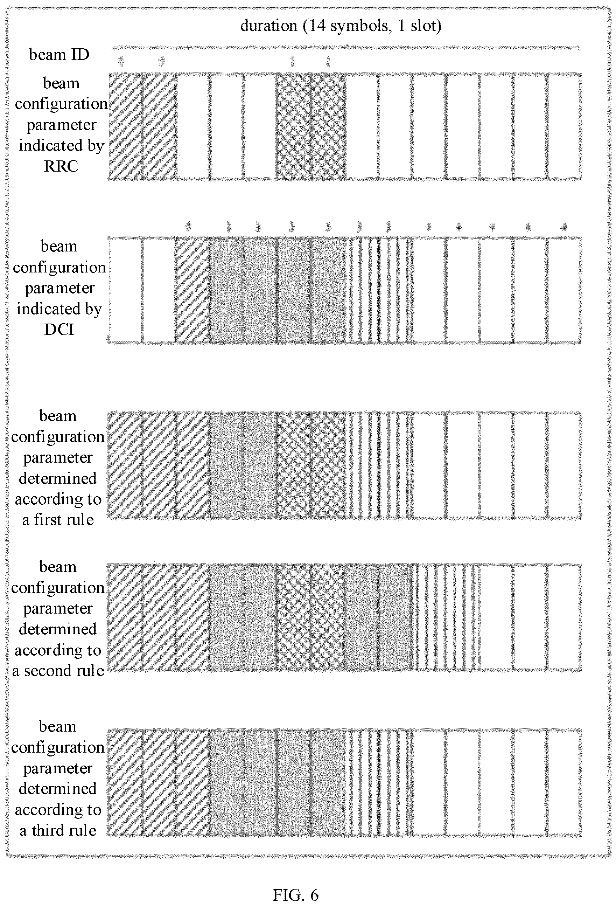

For the above-mentioned first rule, as shown in FIG. 6, the RRC signaling indicates beam configuration parameters for beam 0 and beam 1, and downlink control information (Downlink Control Information, DCI) indicates beam configuration parameters for beam 0 and beams 3 to 4. A time resource indicated by the RRC signaling for beam 1 overlaps a time resource indicated by the DCI for beam 3. In this case, the overlapping resources (the 6th symbol and the 7th symbol) adopts the configuration parameter of beam 1 indicated by the RRC signaling, the 3rd to 5th symbols, and the 8th to 9th symbols of the slot adopt time resources of beam 3 indicated by the DCI, and the first and second symbols of the slot adopt the configuration parameter of beam 0 indicated by the RRC signaling.

For the above-mentioned second rule, as shown in FIG. 6, the RRC signaling indicates beam configuration parameters for beam 0 and beam 1, DCI indicates beam configuration parameters for beam 0 and beams 3 to 4. Time resources of beam 1 indicated by the RRC signaling overlap with those of beam 3 indicated by the DCI, the overlapping resources (the 6th symbol and the 7th symbol) use the configuration parameter of beam 1 indicated by the RRC signaling, while the configuration parameter of beam 3 indicated by the DCI are used in the 8th symbol and the 9th symbol, and the configuration parameters of beam 4 indicated by the DCI are used in the 10th and 11th symbols.

For the third rule mentioned above, as shown in FIG. 6, the RRC signaling indicates beam configuration parameters of beam 0 and beam 1, DCI indicates beam configuration parameters of beam 0 and beams 3 to 4. Time resources of beam 1 indicated by the RRC signaling overlap with those of beam 3 indicated by the DCI, and the overlapping resources (the 6th symbol and the 7th symbol) use the configuration parameter of beam 3 indicated by the DCI. The time resource of beam 3 indicated by DCI is used for the 3rd to 5th symbols and the 8th to 9th symbols of the slot. The first and second symbols of the slot use the configuration parameter of beam 0 indicated by the RRC signaling.

Optionally, the determining the target beam configuration parameter according to the first rule, the second rule or the third rule includes: determining the target configuration parameter according to the first rule, the second rule or the third rule according to indication information transmitted by a network-side device, where the indication information is used to indicate a priority relationship between the beam configuration parameters in the RRC signaling and the beam configuration parameter in the DCI, and the indication information is indicated through the RRC signaling or the DCI.

For example, if the indication information indicates that a priority of the beam configuration parameter in the RRC signaling is higher than a priority of the beam configuration parameter in the DCI, the target beam configuration parameter is determined according to the first rule or the second rule. If the indication information indicates that the priority of the beam configuration parameter in the RRC signaling is lower than that in the DCI, then the target beam configuration parameter is determined according to the third rule.

In the solution according to the embodiments of the present disclosure, a network controlled repeater (NCR) obtains a radio resource control (RRC) signaling, where the RRC signaling includes at least one set of beam configuration parameters, each set of beam configuration parameters includes beam information and a first parameter corresponding to the beam information, and the first parameter includes at least one of a periodicity or a subcarrier spacing (SCS). The NCR determines a target beam configuration parameter according to the at least one set of beam configuration parameters, where the target beam configuration parameter is used for data transmission in an access link, and the access link is a transmission link between the NCR and a UE. Through the above scheme, the purpose of determining the beam configuration parameter of the access link can be achieved, thereby enabling the beam to align with a target user and obtain signal gain.

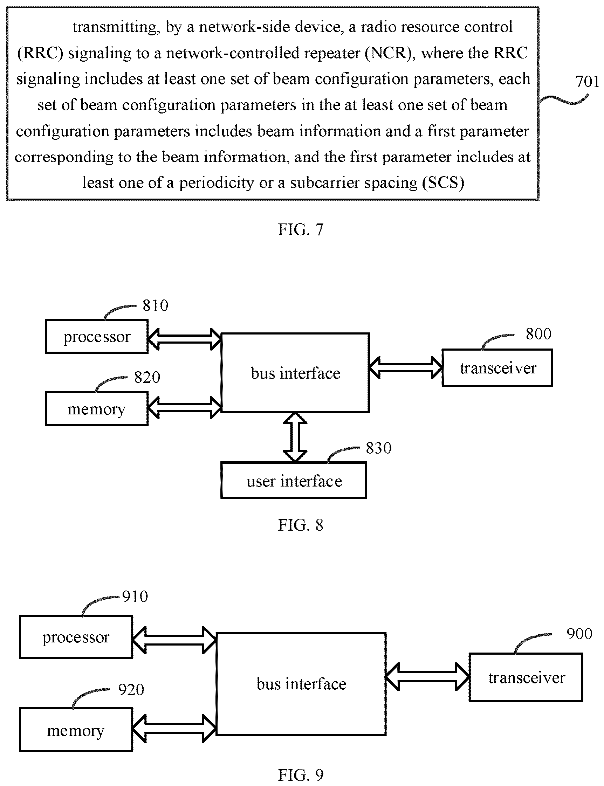

As shown in FIG. 7, an embodiment of the present disclosure further provides a method for indicating beam configuration parameters, including the following steps.

Step 701: transmitting, by a network-side device, a radio resource control (RRC) signaling to a network controlled repeater (NCR), where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS).

Optionally, the aforementioned network-side device may be specifically a base station, and the network-side device transmits the RRC signaling via a control link between the base station and an NCR-MT.

In the embodiments of the present disclosure, a network-side device transmits a radio resource control (RRC) signaling to a network controlled repeater (NCR). The RRC signaling includes at least one set of beam configuration parameters, each set of beam configuration parameters includes beam information and a first parameter corresponding to the beam information, and the first parameter includes at least one of a periodicity or a subcarrier spacing (SCS). In such a manner, the NCR can determine the beam configuration parameter according to the at least one set of beam configuration parameters. The target beam configuration parameter is used for data transmission in the access link, and the access link is a transmission link between the NCR and the UE. Through the above scheme, the objective of indicating the beam configuration parameter of the access link can be achieved.

Optionally, the beam information includes at least one of the following:
beam index; or
time resource set of a beam.

Optionally, the time resource set includes at least one of the following:
a first slot offset, where the first slot offset includes a slot offset of a starting slot of the periodicity relative to a starting position of a radio frame number;
a second slot offset, where the second slot offset includes a slot offset of a starting slot position of a time resource of the beam relative to a starting position of the periodicity;
starting symbol information, where the starting symbol information includes a symbol offset of a starting symbol position of a time resource of the beam relative to a starting slot within the periodicity; or
duration information, where the duration information includes a number of symbols corresponding to a length of a time resource of the beam.

Optionally, a length of the periodicity is an integer multiple of a slot configuration in a time division duplex (TDD) system; or
a length of the periodicity is an integer multiple of a periodicity of the synchronization signal/physical broadcast channel signal block (SSB); or
a length of the periodicity is a configured candidate periodicity length.

Optionally, the SCS is a first subcarrier spacing or a second subcarrier spacing,
where the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between the NCR and a base station.

Optionally, an effective time of the beam information includes any one of the following:
a starting time of a target slot, where the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers;
a starting time of a target subframe, where the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers; or
a starting time of a target periodicity, where the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers.

In the embodiments of the present disclosure, a network-side device transmits a radio resource control (RRC) signaling to a network controlled repeater (NCR). The RRC signaling includes at least one set of beam configuration parameters, each set of beam configuration parameters includes beam information and a first parameter corresponding to the beam information, and the first parameter includes at least one of a periodicity and a subcarrier spacing (SCS). In this way, the NCR can determine the beam configuration parameter according to the at least one set of beam configuration parameters. The target beam configuration parameter is used for transmission in the access link, and the access link is a transmission link between the NCR and the UE. Through the above scheme, the objective of indicating the beam configuration parameter of the access link can be achieved.

As shown in FIG. 8, an embodiment of the present disclosure further provides an apparatus for determining a beam configuration parameter, applied to an NCR, including a memory 820, a transceiver 800, and a processor 810. The memory 820 is configured to store a computer program; the transceiver 800 is configured to transmit and receive data under the control of the processor 810; the processor 810 is further configured to read the computer program from the memory 820 to perform the following operations:
obtaining a radio resource control (RRC) signaling, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS); and
determining a target beam configuration parameter according to the at least one set of beam configuration parameters, where the target beam configuration parameter is used for transmission in an access link, and the access link is a transmission link between the NCR and a UE.
determining a target beam configuration parameter according to the at least one set of beam configuration parameters, where the target beam configuration parameter is used for data transmission in an access link, and the access link is a transmission link between the NCR and a UE.

In FIG. 8, the bus architecture may include any number of interconnected buses and bridges. Specifically, various circuits of one or more processors represented by the processor 810 and a memory represented by the memory 820 are linked together. The bus architecture may also link various other circuits such as peripheral devices, voltage regulators, power management circuits, etc., which are well-known in the art, and therefore, no further descriptions are provided herein. The bus interface provides an interface. The transceiver 800 may be a plurality of elements, that is, include a transmitter and a receiver, and provide a unit for communicating with various other devices on a transmission medium. For different user equipment, the user interface 830 may also be an interface capable of externally or internally connecting to required equipment. The connected equipment includes but not limited to a keypad, a display, a speaker, a microphone, a joystick, and the like.

The processor 810 is responsible for managing the bus architecture and general processing, and the memory 820 may store data used by the processor 810 when performing operations.

Optionally, processor 810 may be a central processing unit (Central Processing Unit, CPU), application specific integrated circuit (Application Specific Integrated Circuit, ASIC), field programmable gate array (Field-Programmable Gate Array, FPGA), or complex programmable logic device (Complex Programmable Logic Device, CPLD), and the processor may also adopt a multi-core architecture.

The processor is configured to execute any one of the methods provided in the embodiments of the present application according to the obtained executable instructions by invoking the computer program stored in the memory. The processor and the memory may also be physically separated.

Optionally, the beam information includes at least one of the following:
beam index; or
time resource set of a beam.

Optionally, the time resource set includes at least one of the following:
a first slot offset, where the first slot offset includes a slot offset of a starting slot of the periodicity relative to a starting position of a radio frame number;
a second slot offset, where the second slot offset includes a slot offset of a starting slot position of a time resource of the beam relative to a starting position of the periodicity;
starting symbol information, where the starting symbol information includes a symbol offset of a starting symbol position of a time resource of the beam relative to a starting slot within the periodicity; or
duration information, where the duration information includes a number of symbols corresponding to a length of a time resource of the beam.

Optionally, a length of the periodicity is an integer multiple of a slot configuration in a time division duplex (TDD) system; or
a length of the periodicity is an integer multiple of a periodicity of a synchronization signal/physical broadcast channel signal block (SSB); or
a length of the periodicity is a configured candidate periodicity length.

Optionally, the SCS is a first subcarrier spacing or a second subcarrier spacing,
where the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between the NCR and a base station.

Optionally, an effective time of the beam information includes any one of the following:
a starting time of a target slot, where the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers;
a starting time of a target subframe, where the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers; or
a starting time of a target periodicity, where the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers.

Optionally, the RRC signaling includes a first RRC signaling and a second RRC signaling, the first RRC signaling includes a first configuration parameter, the second RRC signaling includes a second configuration parameter, an obtaining time of the second RRC signaling is later than an obtaining time of the first RRC signaling, the first configuration parameter includes at least one set of beam configuration parameters, and the second configuration parameter includes at least one set of beam configuration parameters.

Optionally, the first configuration parameter includes one set of beam configuration parameters, and the second configuration parameter includes one set of beam configuration parameters; and the processor 810 is further configured to execute the program to implement the following steps:
after obtaining the second RRC signaling, determining the one set of beam configuration parameters included in the second configuration parameter as the target beam configuration parameter; or
after obtaining the second RRC signaling, determining the target beam configuration parameter according to a positional relationship between a time resource indicated by the first configuration parameter and a time resource indicated by the second configuration parameter.

Optionally, the processor 810 is further configured to execute the program to implement the following steps:
in a case that a first condition is met, determining the target beam configuration parameter according to the positional relationship between the time resource indicated by the first configuration parameter and the time resource indicated by the second configuration parameter; and/or,
in a case that the first condition is not met, determining the one set of beam configuration parameters included in the second configuration parameter as the target beam configuration parameter,
where the first condition includes at least one of the following:
   a periodicity in the first configuration parameter is the same as a periodicity in the second configuration parameter; or
   an SCS in the first configuration parameter is the same as an SCS in the second configuration parameter.

Optionally, the processor 810 is further configured to execute the program to implement the following steps:
in a case that the time resource indicated by the first configuration parameter at least partially overlaps the time resource indicated by the second configuration parameter, determining the one set of beam configuration parameters included in the second configuration parameter as the target beam configuration parameter; or
in a case that the time resource indicated by the first configuration parameter does not overlap with the time resource indicated by the second configuration parameter, determining the one set of beam configuration parameters included in the first configuration parameter and the one set of beam configuration parameters included in the second configuration parameter as the target beam configuration parameter.

Optionally, the first RRC signaling further includes first priority indication information; the second RRC signaling further includes second priority indication information; where the first priority indication information is used to indicate that a priority of the first configuration parameter is a first priority, and the second priority indication information is used to indicate that a priority of the second configuration parameter is a second priority.

Optionally, the first configuration parameter includes one set of beam configuration parameters, and the second configuration parameter includes one set of beam configuration parameters; and the processor 810 is further configured to execute the program to implement the following steps:
in a case that a second condition is met, for a first time resource, determining one set of beam configuration parameters included by a configuration parameter corresponding to a target priority as the target beam configuration parameter, and for a second time resource, determining the one set of beam configuration parameters included in the first configuration parameter and the one set of beam configuration parameters included in the second configuration parameter as the target beam configuration parameter, where the target priority is a higher priority of the first priority and the second priority; and/or,
in a case that the second condition is not met, determining the one set of beam configuration parameters included in the first configuration parameter and the one set of beam configuration parameters included in the second configuration parameter as the target configuration parameter,
where the second condition includes any one of the following:
   a time resource indicated by the first configuration parameter at least partially overlaps a time resource indicated by the second configuration parameter;
   a periodicity in the first configuration parameter is the same as a periodicity in the second configuration parameter, and a time resource in the first configuration parameter at least partially overlaps a time resource in the second configuration parameter;
   an SCS in the first configuration parameter is the same as an SCS in the second configuration parameter, and a time resource in the first configuration parameter at least partially overlaps a time resource in the second configuration parameter; or
   an SCS in the first configuration parameter is the same as an SCS in the second configuration parameter, a periodicity in the first configuration parameter is the same as a periodicity in the second configuration parameter, and a time resource in the first configuration parameter at least partially overlaps a time resource in the second configuration parameter,
   where the first time resource is an overlapping time resource between the time resource indicated by the first configuration parameter and the time resource indicated by the second configuration parameter; and
   the second time resource is a time resource in the time resource indicated by the first configuration parameter and the time resource indicated by the second configuration parameter excluding the first time resource.

Optionally, the first RRC signaling further includes first index information, and the second RRC signaling further includes second index information; where the first index information includes an index corresponding to each set of beam configuration parameters in the first configuration parameter, and the second index information includes an index corresponding to each set of beam configuration parameters in the second configuration parameter.

Optionally, the first configuration parameter includes at least one set of beam configuration parameters, and the second configuration parameter includes at least one set of beam configuration parameters; and the processor 810 is further configured to execute the program to implement the following steps:
in a case that a first index corresponding to a first set of beam configuration parameters in the first configuration parameter is different from a second index corresponding to a second set of beam configuration parameters in the second configuration parameter, determining the first set of beam configuration parameters corresponding to the first index and the second set of beam configuration parameters corresponding to the second index as the target beam configuration parameter; or,
in a case that a first index corresponding to a first set of beam configuration parameters in the first configuration parameter is the same as a second index corresponding to a second set of beam configuration parameters in the second configuration parameter, determining the second set of beam configuration parameters as a target beam configuration parameter corresponding to the first index; or,
where the third condition includes one or more of the following:
   a periodicity in the first set of beam configuration parameters and a periodicity in the second set of beam configuration parameters are the same or different; or
   an SCS in the first set of beam configuration parameters and an SCS in the second set of beam configuration parameters are the same or different,
   where the first set of beam configuration parameters is any one set of beam configuration parameters in the at least one set of beam configuration parameters included in the first configuration parameter, and the second set of beam configuration parameters is any one of the beam configuration parameters in at least one set of beam configuration parameters included in the second configuration parameter.

Optionally, the processor 810 is further configured to execute the program to implement the following steps:
in a case that the periodicity in the first set of beam configuration parameters is the same as the periodicity in the second set of beam configuration parameters, the SCS in the first set of beam configuration parameters is the same as the SCS in the second set of beam configuration parameters, and a time resource indicated by the first set of beam configuration parameters at least partially overlaps a time resource indicated by the second set of beam configuration parameters, for a third time resource, determining the second set of beam configuration parameters as the target beam configuration parameter corresponding to the first index, and for a fourth time resource, determining the first set of beam configuration parameters and the second set of beam configuration parameters as the target beam configuration parameter corresponding to the first index, where the third time resource is an overlapping time resource between the time resource indicated by the first set of beam configuration parameters and the time resource indicated by the second set of beam configuration parameters, and the fourth time resource is a time resource in the time resource indicated by the first set of beam configuration parameters and the time resource indicated by the second set of beam configuration parameters excluding the third time resource; and
in a case where the periodicity in the first set of configuration parameters is different from the periodicity in the second set of configuration parameters, and/or the SCS in the first set of configuration parameters is different from the SCS in the second set of configuration parameters, taking the second set of beam configuration parameters as the target beam configuration parameter corresponding to the first index,
where the first set of beam configuration parameters is any one set of beam configuration parameters in the at least one set of beam configuration parameters included in the first configuration parameter, and the second set of beam configuration parameters is any one of the beam configuration parameters in at least one set of beam configuration parameters included in the second configuration parameter.

Optionally, the processor 810 is further configured to execute the program to implement the following steps:
in a case that a fifth time resource indicated by the at least one set of beam configuration parameters in the RRC signaling at least partially overlaps a sixth time resource indicated by a beam configuration parameter in a downlink control information (DCI), determining the target beam configuration parameter according to a first rule, a second rule or a third rule,
where the first rule includes: for an overlapping resource, determining the target beam configuration parameter according to the at least one set of beam configuration parameters in the RRC signaling; for a resource in the fifth time resource excluding the overlapping resource, determining the target beam configuration parameter according to the at least one set of beam configuration parameters in the RRC signaling; and for a resource in the sixth time resource excluding the overlapping resource, determining the target beam configuration parameter according to the beam configuration parameter in the DCI;
the second rule includes: for an overlapping resource, determining the target beam configuration parameter according to the at least one set of beam configuration parameters in the RRC signaling; and for a first target time resource, determining a beam configuration parameter of the first target time resource according to a part of the beam configuration parameter in the DCI, where the part of the beam configuration parameter in the DCI is a beam configuration parameter of a second target time resource, the second target time resource is a time resource in the sixth time resource excluding a time resource before the overlapping resource, the first target time resource is a resource located after the overlapping resource, and a resource length corresponding to the first target time resource is the same as a resource length corresponding to the second target time resource;
the third rule includes: for an overlapping resource, determining the target beam configuration parameter according to the beam configuration parameter in the DCI; for a resource in the fifth time resource excluding the overlapping resource, determining the target beam configuration parameter according to the at least one set of beam configuration parameters in the RRC signaling; and for a resource in the sixth time resource excluding the overlapping resource, determining the target beam configuration parameter according to the beam configuration parameter in the DCI.

Optionally, the processor 810 is further configured to execute the program to implement the following steps: determining the target configuration parameter according to the first rule, the second rule or the third rule according to indication information transmitted by a network-side device, where the indication information is used to indicate a priority relationship between the beam configuration parameters in the RRC signaling and the beam configuration parameter in the DCI, and the indication information is indicated through the RRC signaling or the DCI.

It should be noted that the above apparatus provided in the embodiment of the present disclosure can implement all method steps implemented in the above embodiments about the method for determining a beam configuration parameter, and can achieve the same technical effects. Therefore, the description and beneficial effects of this embedment that are the same as the method embodiments will not be described here in detail.

As shown in FIG. 9, an embodiment of the present disclosure further provides an apparatus for indicating a beam configuration parameter, applied to a network-side device. The apparatus includes a memory 920, a transceiver 900, and a processor 910. The memory 920 is configured to store a computer program; The transceiver 900 is configured to transmit and receive data under the control of the processor 910; the processor 910 is further configured to read the computer program from the memory 920 to perform the following operations:
transmitting a radio resource control (RRC) signaling, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS).

In FIG. 9, the bus architecture may include any number of interconnected buses and bridges, specifically one or more processors represented by processor 910 and various circuits of memory represented by memory 920 are linked together. The bus architecture may also link various other circuits such as peripheral devices, voltage regulators, power management circuits, etc., which are well-known in the art, and therefore, no further descriptions are provided herein. The bus interface provides an interface. The transceiver 900 may be a plurality of elements, that is, include a transmitter and a receiver, and provide a unit for communicating with various other devices on a transmission medium. The transmission medium includes a wireless channel, a wired channel, an optical cable, and other transmission media. The processor 910 is responsible for managing the bus architecture and general processing, and the memory 920 may store the data used by the processor 910 when performing operations.

The processor 910 may be a CPU, ASIC, FPGA, or CPLD, and the processor may also adopt a multi-core architecture.

It should be noted that the above apparatus provided in the embodiment of the present disclosure can implement all method steps implemented in the above embodiments about the method for determining a beam configuration parameter applied to the network-side device, and can achieve the same technical effects. Therefore, the description and beneficial effects of this embedment that are the same as the method embodiments will not be described here in detail.

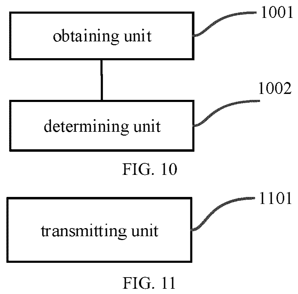

As shown in FIG. 10, an embodiment of the present disclosure further provides an apparatus for determining a beam configuration parameter, including:
an obtaining unit 1001, configured to obtain a radio resource control (RRC) signaling, wherein the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS); and
a determining unit 100, configured to determine a target beam configuration parameter according to the at least one set of beam configuration parameters, where the target beam configuration parameter is used for data transmission in an access link, and the access link is a transmission link between an NCR and a UE.

Optionally, the beam information includes at least one of the following:
beam index; or
time resource set of a beam.

Optionally, the time resource set includes at least one of the following:
a first slot offset, where the first slot offset includes a slot offset of a starting slot of the periodicity relative to a starting position of a radio frame number;
a second slot offset, where the second slot offset includes a slot offset of a starting slot position of a time resource of the beam relative to a starting position of the periodicity;
starting symbol information, where the starting symbol information includes a symbol offset of a starting symbol position of a time resource of the beam relative to a starting slot within the periodicity; or
duration information, where the duration information includes a number of symbols corresponding to a length of a time resource of the beam.

Optionally, a length of the periodicity is an integer multiple of a slot configuration in a time division duplex (TDD) system; or
a length of the periodicity is an integer multiple of a periodicity of a synchronization signal/physical broadcast channel signal block (SSB); or
a length of the periodicity is a configured candidate periodicity length.

Optionally, the SCS is a first subcarrier spacing or a second subcarrier spacing,
where the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between the NCR and a base station.

Optionally, an effective time of the beam information includes any one of the following:
a starting time of a target slot, where the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers;
a starting time of a target subframe, where the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers; or
a starting time of a target periodicity, where the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers.

Optionally, the RRC signaling includes a first RRC signaling and a second RRC signaling, the first RRC signaling includes a first configuration parameter, the second RRC signaling includes a second configuration parameter, an obtaining time of the second RRC signaling is later than an obtaining time of the first RRC signaling, the first configuration parameter includes at least one set of beam configuration parameters, and the second configuration parameter includes at least one set of beam configuration parameters.

Optionally, the first configuration parameter includes one set of beam configuration parameters, and the second configuration parameter includes one set of beam configuration parameters; the determining unit is further configured to: after obtaining the second RRC signaling, determine the one set of beam configuration parameters included in the second configuration parameter as the target beam configuration parameter; or after obtaining the second RRC signaling, determine the target beam configuration parameter according to a positional relationship between a time resource indicated by the first configuration parameter and a time resource indicated by the second configuration parameter.

Optionally, the determining unit is further configured to:
in a case that a first condition is met, determine the target beam configuration parameter according to the positional relationship between the time resource indicated by the first configuration parameter and the time resource indicated by the second configuration parameter; and/or,
in a case that the first condition is not met, determine the one set of beam configuration parameters included in the second configuration parameter as the target beam configuration parameter;
where the first condition includes at least one of the following:
   a periodicity in the first configuration parameter is the same as a periodicity in the second configuration parameter; or
   an SCS in the first configuration parameter is the same as an SCS in the second configuration parameter.

Optionally, the determining unit is further configured to:
in a case that the time resource indicated by the first configuration parameter at least partially overlaps the time resource indicated by the second configuration parameter, determine the one set of beam configuration parameters included in the second configuration parameter as the target beam configuration parameter; or
in a case that the time resource indicated by the first configuration parameter does not overlap with the time resource indicated by the second configuration parameter, determine the one set of beam configuration parameters included in the first configuration parameter and the one set of beam configuration parameters included in the second configuration parameter as the target beam configuration parameter.

Optionally, the first RRC signaling further includes first priority indication information; the second RRC signaling further includes second priority indication information; where the first priority indication information is used to indicate that a priority of the first configuration parameter is a first priority, and the second priority indication information is used to indicate that a priority of the second configuration parameter is a second priority.

Optionally, the first configuration parameter includes one set of beam configuration parameters, and the second configuration parameter includes one set of beam configuration parameters; and the determining unit is further configured to:
in a case that a second condition is met, for a first time resource, determine one set of beam configuration parameters included by a configuration parameter corresponding to a target priority as the target beam configuration parameter, and for a second time resource, determine the one set of beam configuration parameters included in the first configuration parameter and the one set of beam configuration parameters included in the second configuration parameter as the target beam configuration parameter, where the target priority is a higher priority of the first priority and the second priority; and/or,
in a case that the second condition is not met, determine the one set of beam configuration parameters included in the first configuration parameter and the one set of beam configuration parameters included in the second configuration parameter as the target configuration parameter;
where the second condition includes any one of the following:
   a time resource indicated by the first configuration parameter at least partially overlaps a time resource indicated by the second configuration parameter;
   a periodicity in the first configuration parameter is the same as a periodicity in the second configuration parameter, and a time resource in the first configuration parameter at least partially overlaps a time resource in the second configuration parameter;
   an SCS in the first configuration parameter is the same as an SCS in the second configuration parameter, and a time resource in the first configuration parameter at least partially overlaps a time resource in the second configuration parameter; or
   an SCS in the first configuration parameter is the same as an SCS in the second configuration parameter, a periodicity in the first configuration parameter is the same as a periodicity in the second configuration parameter, and a time resource in the first configuration parameter at least partially overlaps a time resource in the second configuration parameter,
   where the first time resource is an overlapping time resource between the time resource indicated by the first configuration parameter and the time resource indicated by the second configuration parameter; and
   the second time resource is a time resource of the time resource indicated by the first configuration parameter and the time resource indicated by the second configuration parameter excluding the first time resource.

Optionally, the first RRC signaling further includes first index information, and the second RRC signaling further includes second index information; where the first index information includes an index corresponding to each set of beam configuration parameters in the first configuration parameter, and the second index information includes an index corresponding to each set of beam configuration parameters in the second configuration parameter.

Optionally, the first configuration parameter includes at least one set of beam configuration parameters, and the second configuration parameter includes at least one set of beam configuration parameters; and the determining unit is further configured to:
in a case that a first index corresponding to a first set of beam configuration parameters in the first configuration parameter is different from a second index corresponding to a second set of beam configuration parameters in the second configuration parameter, determine the first set of beam configuration parameters corresponding to the first index and the second set of beam configuration parameters corresponding to the second index as the target beam configuration parameter; or,
in a case that a first index corresponding to a first set of beam configuration parameters in the first configuration parameter is the same as a second index corresponding to a second set of beam configuration parameters in the second configuration parameter, determine the second set of beam configuration parameters as a target beam configuration parameter corresponding to the first index; or,
where the third condition includes one or more of the following:
   a periodicity in the first set of beam configuration parameters and a periodicity in the second set of beam configuration parameters are the same or different; or
   an SCS in the first set of beam configuration parameters and an SCS in the second set of beam configuration parameters are the same or different,
   where the first set of beam configuration parameters is any one set of beam configuration parameters in the at least one set of beam configuration parameters included in the first configuration parameter, and the second set of beam configuration parameters is any one of the beam configuration parameters in at least one set of beam configuration parameters included in the second configuration parameter.

Optionally, the determining unit is further configured to:
in a case that the periodicity in the first set of beam configuration parameters is the same as the periodicity in the second set of beam configuration parameters, the SCS in the first set of beam configuration parameters is the same as the SCS in the second set of beam configuration parameters, and a time resource indicated by the first set of beam configuration parameters at least partially overlaps a time resource indicated by the second set of beam configuration parameters, for a third time resource, determine the second set of beam configuration parameters as the target beam configuration parameter corresponding to the first index, and for a fourth time resource, determine the first set of beam configuration parameters and the second set of beam configuration parameters as the target beam configuration parameter corresponding to the first index, where the third time resource is an overlapping time resource between the time resource indicated by the first set of beam configuration parameters and the time resource indicated by the second set of beam configuration parameters, and the fourth time resource is a time resource in the time resource indicated by the first set of beam configuration parameters and the time resource indicated by the second set of beam configuration parameters excluding the third time resource; and
in a case that the periodicity in the first set of configuration parameters is different from the periodicity in the second set of configuration parameters, and/or the SCS in the first set of configuration parameters is different from the SCS in the second set of configuration parameters, take the second set of beam configuration parameters as the target beam configuration parameter corresponding to the first index,
where the first set of beam configuration parameters is any one set of beam configuration parameters in the at least one set of beam configuration parameters included in the first configuration parameter, and the second set of beam configuration parameters is any one of the beam configuration parameters in at least one set of beam configuration parameters included in the second configuration parameter.

Optionally, the determining unit is further configured to:
in a case that a fifth time resource indicated by at least one set of beam configuration parameters in the RRC signaling at least partially overlaps a sixth time resource indicated by a beam configuration parameter in a downlink control information (DCI), determine the target beam configuration parameter according to a first rule, a second rule or a third rule,
where the first rule includes: for an overlapping resource, determine the target beam configuration parameter according to the at least one set of beam configuration parameters in the RRC signaling; for a resource in the fifth time resource excluding the overlapping resource, determine the target beam configuration parameter according to the at least one set of beam configuration parameters in the RRC signaling; and for a resource in the sixth time resource excluding the overlapping resource, determine the target beam configuration parameter according to the beam configuration parameter in the DCI;
the second rule includes: for an overlapping resource, determine the target beam configuration parameter according to the at least one set of beam configuration parameters in the RRC signaling; and for a first target time resource, determine a beam configuration parameter of the first target time resource according to a part of the beam configuration parameter in the DCI, where the part of the beam configuration parameter in the DCI is a beam configuration parameter of a second target time resource, the second target time resource is a time resource in the sixth time resource excluding for a time resource before the overlapping resource, the first target time resource is a resource located after the overlapping resource, and a resource length corresponding to the first target time resource is the same as a resource length corresponding to the second target time resource;
the third rule includes: for an overlapping resource, determine the target beam configuration parameter according to the beam configuration parameter in the DCI; for a resource in the fifth time resource excluding the overlapping resource, determine the target beam configuration parameter according to the at least one set of beam configuration parameters in the RRC signaling; and for a resource in the sixth time resource excluding the overlapping resource, determine the target beam configuration parameter according to the beam configuration parameter in the DCI.

Optionally, the determining unit is further configured to: determine the target configuration parameter according to the first rule, the second rule or the third rule according to indication information transmitted by a network-side device, where the indication information is used to indicate a priority relationship between the beam configuration parameters in the RRC signaling and the beam configuration parameter in the DCI, and the indication information is indicated through the RRC signaling or the DCI.

It should be noted that the above apparatus provided in the embodiment of the present disclosure can implement all method steps implemented in the above embodiments about the method for determining a beam configuration parameter, and can achieve the same technical effects. Therefore, the description and beneficial effects of this embedment that are the same as the method embodiments will not be described here in detail.

As shown in FIG. 11, an embodiment of the present disclosure also provides an apparatus for indicating a beam configuration parameter, including:
a transmitting unit 1101, configured to transmit a radio resource control (RRC) signaling to a network controlled repeater (NCR), where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS).

Optionally, the beam information includes at least one of the following:
beam index; or
time resource set of a beam.

Optionally, the time resource set includes at least one of the following:
a first slot offset, where the first slot offset includes a slot offset of a starting slot of the periodicity relative to a starting position of a radio frame number;
a second slot offset, where the second slot offset includes a slot offset of a starting slot position of a time resource of the beam relative to a starting position of the periodicity;
starting symbol information, where the starting symbol information includes a symbol offset of a starting symbol position of a time resource of the beam relative to a starting slot within the periodicity; or
duration information, where the duration information includes a number of symbols corresponding to a length of a time resource of the beam.

Optionally, a length of the periodicity is an integer multiple of a slot configuration in a time division duplex (TDD) system; or
a length of the periodicity is an integer multiple of a periodicity of the synchronization signal/physical broadcast channel signal block (SSB); or
a length of the periodicity is a configured candidate periodicity length.

Optionally, the SCS is a first subcarrier spacing or a second subcarrier spacing, where the first subcarrier spacing is determined according to a subcarrier spacing corresponding to a frequency band of the access link; and the second subcarrier spacing is determined according to a subcarrier spacing corresponding to a frequency band of a control link, and the control link is a transmission link between the NCR and a base station.

Optionally, an effective time of the beam information includes any one of the following:
a starting time of a target slot, where the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers;
a starting time of a target subframe, where the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers; or
a starting time of a target periodicity, where the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling includes acknowledgement (ACK) or negative acknowledgement (NACK), and both K1 and K2 are positive integers.

It should be noted that the above apparatus provided in the embodiment of the present disclosure can implement all method steps implemented in the above embodiments about the method for indicating a beam configuration parameter, and can achieve the same technical effects. Therefore, the description and beneficial effects of this embedment that are the same as the method embodiments will not be described here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a processor readable storage medium, where the processor readable storage medium stores a computer program. The computer program is used for causing the processor to execute the following steps:
obtaining a radio resource control (RRC) signaling, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS); and determining a target beam configuration parameter according to the at least one set of beam configuration parameters, where the target beam configuration parameter is used for data transmission in an access link, and the access link is a transmission link between an NCR and a UE; or
transmitting a radio resource control (RRC) signaling, where the RRC signaling includes at least one set of beam configuration parameters, each set of beam configuration parameters in the at least one set of beam configuration parameters includes beam information and a first parameter corresponding to the beam information, and the first parameter includes at least one of a periodicity or a subcarrier spacing (SCS).

The UE device involved in the embodiments of the present disclosure may be a device that provides voice and/or data connectivity to a user, a handheld device with a radio connection function, or other processing devices connected to a radio modem or the like. In different systems, the names of UE may be different. For example, in a 5G system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (Internet Protocol, IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (Base Transceiver Station, BTS) in the global system for mobile communications (Global System for Mobile communications, GSM) or code division multiple access (Code Division Multiple Access, CDMA), a NodeB in the wide-band code division multiple access (Wide-band Code Division Multiple Access, WCDMA), an evolved Node B (evolutional Node B, eNB or e-NodeB) in long term evolution (long term evolution, LTE) system, a 5G base station (gNB) in 5G network architecture (next generation system), a home evolved Node B (Home evolved Node B, HeNB), a relay node (relay node), a femto (femto), a pico (pico), or the like, which is not limited herein. In some network architectures, the network device may include a centralized unit (centralized unit, CU) node and a distributed unit (distributed unit, DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B". Apparently, a person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A method for determining a beam configuration parameter, comprising:
obtaining, by a network controlled repeater (NCR), a radio resource control (RRC) signaling, wherein the RRC signaling comprises at least one set of beam configuration parameters, each set of beam configuration parameters in the at least one set of beam configuration parameters comprises beam information and a first parameter corresponding to the beam information, and the first parameter comprises at least one of a periodicity or a subcarrier spacing (SCS); and
determining, by the NCR, a target beam configuration parameter, according to the at least one set of beam configuration parameters, wherein the target beam configuration parameter is used for data transmission in an access link, and the access link is a transmission link between the NCR and a UE.

2. The method according to claim 1, wherein the beam information comprises at least one of the following:
beam index; or
time resource set of a beam.

3. The method according to claim 2, wherein the time resource set comprises at least one of the following:
a first slot offset, wherein the first slot offset comprises a slot offset of a starting slot of the periodicity relative to a starting position of a radio frame number;
a second slot offset, wherein the second slot offset comprises a slot offset of a starting slot position of a time resource of the beam relative to a starting position of the periodicity;
starting symbol information, wherein the starting symbol information comprises a symbol offset of a starting symbol position of a time resource of the beam relative to a starting slot within the periodicity; or
duration information, wherein the duration information comprises a number of symbols corresponding to a length of a time resource of the beam.

4. The method according to claim 1 or 2, wherein a length of the periodicity is an integer multiple of a slot configuration in a time division duplex (TDD) system; or
a length of the periodicity is an integer multiple of a periodicity of a synchronization signal/physical broadcast channel signal block (SSB); or
a length of the periodicity is a configured candidate periodicity length.

5. The method according to claim 1, wherein the SCS is a first subcarrier spacing or a second subcarrier spacing,
wherein the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between the NCR and a base station.

6. The method according to claim 1, wherein an effective time of the beam information comprises any one of the following:
a starting time of a target slot, wherein the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers;
a starting time of a target subframe, wherein the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers; or
a starting time of a target periodicity, wherein the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers.

7. The method according to claim 2, wherein the RRC signaling comprises a first RRC signaling and a second RRC signaling, the first RRC signaling comprises a first configuration parameter, the second RRC signaling comprises a second configuration parameter, an obtaining time of the second RRC signaling is later than an obtaining time of the first RRC signaling, the first configuration parameter comprises at least one set of beam configuration parameters, and the second configuration parameter comprises at least one set of beam configuration parameters.

8. The method according to claim 7, wherein the first configuration parameter comprises one set of beam configuration parameters, and the second configuration parameter comprises one set of beam configuration parameters;
the determining, by the NCR, the target beam configuration parameter according to the at least one set of beam configuration parameters comprises:
after obtaining the second RRC signaling, determining the one set of beam configuration parameters comprised in the second configuration parameter as the target beam configuration parameter; or
after obtaining the second RRC signaling, determining the target beam configuration parameter according to a positional relationship between a time resource indicated by the first configuration parameter and a time resource indicated by the second configuration parameter.

9. The method according to claim 8, wherein the determining the target beam configuration parameter according to the positional relationship between the time resource indicated by the first configuration parameter and the time resource indicated by the second configuration parameter comprises:
in a case that a first condition is met, determining the target beam configuration parameter according to the positional relationship between the time resource indicated by the first configuration parameter and the time resource indicated by the second configuration parameter; and/or,
in a case that the first condition is not met, determining the one set of beam configuration parameters comprised in the second configuration parameter as the target beam configuration parameter,
wherein the first condition comprises at least one of the following:
a periodicity in the first configuration parameter is the same as a periodicity in the second configuration parameter; or
an SCS in the first configuration parameter is the same as an SCS in the second configuration parameter.

10. The method according to claim 8, wherein the determining the target beam configuration parameter according to the positional relationship between the time resource indicated by the first configuration parameter and the time resource indicated by the second configuration parameter comprises:
in a case that the time resource indicated by the first configuration parameter at least partially overlaps the time resource indicated by the second configuration parameter, determining the one set of beam configuration parameters comprised in the second configuration parameter as the target beam configuration parameter; or
in a case that the time resource indicated by the first configuration parameter does not overlap with the time resource indicated by the second configuration parameter, determining the one set of beam configuration parameters comprised in the first configuration parameter and the one set of beam configuration parameters comprised in the second configuration parameter as the target beam configuration parameter.

11. The method according to claim 7, wherein the first RRC signaling further comprises first priority indication information;
the second RRC signaling further comprises second priority indication information;
wherein the first priority indication information is used to indicate that a priority of the first configuration parameter is a first priority, and the second priority indication information is used to indicate that a priority of the second configuration parameter is a second priority.

12. The method according to claim 11, wherein the first configuration parameter comprises one set of beam configuration parameters, and the second configuration parameter comprises one set of beam configuration parameters;
the determining, by the NCR, the target beam configuration parameter according to the at least one set of beam configuration parameters comprises:
in a case that a second condition is met, for a first time resource, determining one set of beam configuration parameters comprised by a configuration parameter corresponding to a target priority as the target beam configuration parameter, and for a second time resource, determining the one set of beam configuration parameters comprised in the first configuration parameter and the one set of beam configuration parameters comprised in the second configuration parameter as the target beam configuration parameter, wherein the target priority is a higher priority of the first priority and the second priority; and/or,
in a case that the second condition is not met, determining the one set of beam configuration parameters comprised in the first configuration parameter and the one set of beam configuration parameters comprised in the second configuration parameter as the target configuration parameter,
wherein the second condition comprises any one of the following:
a time resource indicated by the first configuration parameter at least partially overlaps a time resource indicated by the second configuration parameter;
a periodicity in the first configuration parameter is the same as a periodicity in the second configuration parameter, and a time resource in the first configuration parameter at least partially overlaps a time resource in the second configuration parameter;
an SCS in the first configuration parameter is the same as an SCS in the second configuration parameter, and a time resource in the first configuration parameter at least partially overlaps a time resource in the second configuration parameter; or
an SCS in the first configuration parameter is the same as an SCS in the second configuration parameter, a periodicity in the first configuration parameter is the same as a periodicity in the second configuration parameter, and a time resource in the first configuration parameter at least partially overlaps a time resource in the second configuration parameter,
wherein the first time resource is an overlapping time resource between the time resource indicated by the first configuration parameter and the time resource indicated by the second configuration parameter; and
the second time resource is a time resource in the time resource indicated by the first configuration parameter and the time resource indicated by the second configuration parameter excluding the first time resource.

13. The method according to claim 7, wherein the first RRC signaling further comprises first index information, and the second RRC signaling further comprises second index information;
wherein the first index information comprises an index corresponding to each set of beam configuration parameters in the first configuration parameter, and the second index information comprises an index corresponding to each set of beam configuration parameters in the second configuration parameter.

14. The method according to claim 13, wherein the first configuration parameter comprises at least one set of beam configuration parameters, and the second configuration parameter comprises at least one set of beam configuration parameters;
the determining, by the NCR, the target beam configuration parameter according to the at least one set of beam configuration parameters comprises:
in a case that a first index corresponding to a first set of beam configuration parameters in the first configuration parameter is different from a second index corresponding to a second set of beam configuration parameters in the second configuration parameter, determining the first set of beam configuration parameters corresponding to the first index and the second set of beam configuration parameters corresponding to the second index as the target beam configuration parameter; or,
in a case that a first index corresponding to a first set of beam configuration parameters in the first configuration parameter is the same as a second index corresponding to a second set of beam configuration parameters in the second configuration parameter, determining the second set of beam configuration parameters as a target beam configuration parameter corresponding to the first index; or,
determining a target beam configuration parameter corresponding to the first index according to a third condition,
wherein the third condition comprises one or more of the following:
a periodicity in the first set of beam configuration parameters and a periodicity in the second set of beam configuration parameters are the same or different; or
an SCS in the first set of beam configuration parameters and an SCS in the second set of beam configuration parameters are the same or different,
wherein the first set of beam configuration parameters is any one set of beam configuration parameters in the at least one set of beam configuration parameters comprised in the first configuration parameter, and the second set of beam configuration parameters is any one of the beam configuration parameters in at least one set of beam configuration parameters comprised in the second configuration parameter.

15. The method according to claim 14, wherein the determining the target beam configuration parameter corresponding to the first index according to the third condition comprises:
in a case that the periodicity in the first set of beam configuration parameters is the same as the periodicity in the second set of beam configuration parameters, the SCS in the first set of beam configuration parameters is the same as the SCS in the second set of beam configuration parameters, and a time resource indicated by the first set of beam configuration parameters at least partially overlaps a time resource indicated by the second set of beam configuration parameters, for a third time resource, determining the second set of beam configuration parameters as the target beam configuration parameter corresponding to the first index, and for a fourth time resource, determining the first set of beam configuration parameters and the second set of beam configuration parameters as the target beam configuration parameter corresponding to the first index, wherein the third time resource is an overlapping time resource between the time resource indicated by the first set of beam configuration parameters and the time resource indicated by the second set of beam configuration parameters, and the fourth time resource is a time resource in the time resource indicated by the first set of beam configuration parameters and the time resource indicated by the second set of beam configuration parameters excluding the third time resource; and
in a case that the periodicity in the first set of beam configuration parameters is different from the periodicity in the second set of beam configuration parameters, and/or the SCS in the first set of beam configuration parameters is different from the SCS in the second set of beam configuration parameters, taking the second set of beam configuration parameters as the target beam configuration parameter corresponding to the first index.

16. The method according to claim 2, wherein the determining, by the NCR, the target beam configuration parameter according to the at least one set of beam configuration parameters comprises:
in a case that a fifth time resource indicated by the at least one set of beam configuration parameters in the RRC signaling at least partially overlaps a sixth time resource indicated by a beam configuration parameter in a downlink control information (DCI), determining the target beam configuration parameter according to a first rule, a second rule or a third rule,
wherein the first rule comprises: for an overlapping resource, determining the target beam configuration parameter according to the at least one set of beam configuration parameters in the RRC signaling; for a resource in the fifth time resource excluding the overlapping resource, determining the target beam configuration parameter according to the at least one set of beam configuration parameters in the RRC signaling; and for a resource in the sixth time resource excluding the overlapping resource, determining the target beam configuration parameter according to the beam configuration parameter in the DCI;
the second rule comprises: for an overlapping resource, determining the target beam configuration parameter according to the at least one set of beam configuration parameters in the RRC signaling; and for a first target time resource, determining a beam configuration parameter of the first target time resource according to a part of the beam configuration parameter in the DCI, wherein the part of the beam configuration parameter in the DCI is a beam configuration parameter of a second target time resource, the second target time resource is a time resource in the sixth time resource excluding a time resource before the overlapping resource, the first target time resource is a resource located after the overlapping resource, and a resource length corresponding to the first target time resource is the same as a resource length corresponding to the second target time resource;
the third rule comprises: for an overlapping resource, determining the target beam configuration parameter according to the beam configuration parameter in the DCI; for a resource in the fifth time resource excluding the overlapping resource, determining the target beam configuration parameter according to the at least one set of beam configuration parameters in the RRC signaling; and for a resource in the sixth time resource excluding the overlapping resource, determining the target beam configuration parameter according to the beam configuration parameter in the DCI.

17. The method according to claim 16, wherein the determining the target beam configuration parameter according to the first rule, the second rule or the third rule comprises:
determining the target configuration parameter according to the first rule, the second rule or the third rule according to indication information transmitted by a network-side device,
wherein the indication information is used to indicate a priority relationship between the beam configuration parameters in the RRC signaling and the beam configuration parameter in the DCI, and the indication information is indicated through the RRC signaling or the DCI.

18. A method for indicating a beam configuration parameter, comprising:
transmitting, by a network-side device, a radio resource control (RRC) signaling to a network controlled repeater (NCR), wherein the RRC signaling comprises at least one set of beam configuration parameters, each set of beam configuration parameters in the at least one set of beam configuration parameters comprises beam information and a first parameter corresponding to the beam information, and the first parameter comprises at least one of a periodicity or a subcarrier spacing (SCS).

19. The method according to claim 18, wherein the beam information comprises at least one of the following:
beam index; or
time resource set of a beam.

20. The method according to claim 19, wherein the time resource set comprises at least one of the following:
a first slot offset, wherein the first slot offset comprises a slot offset of a starting slot of the periodicity relative to a starting position of a radio frame number;
a second slot offset, wherein the second slot offset comprises a slot offset of a starting slot position of a time resource of the beam relative to a starting position of the periodicity;
starting symbol information, wherein the starting symbol information comprises a symbol offset of a starting symbol position of a time resource of the beam relative to a starting slot within the periodicity; or
duration information, wherein the duration information comprises a number of symbols corresponding to a length of a time resource of the beam.

21. The method according to claim 18 or 19, wherein a length of the periodicity is an integer multiple of a slot configuration in a time division duplex (TDD) system; or
a length of the periodicity is an integer multiple of a periodicity of the synchronization signal/physical broadcast channel signal block (SSB); or
a length of the periodicity is a configured candidate periodicity length.

22. The method according to claim 18, wherein the SCS is a first subcarrier spacing or a second subcarrier spacing,
wherein the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between the NCR and a base station.

23. The method according to claim 18, wherein an effective time of the beam information comprises any one of the following:
a starting time of a target slot, wherein the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers;
a starting time of a target subframe, wherein the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers; or
a starting time of a target periodicity, wherein the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers.

24. An apparatus for determining a beam configuration parameter, comprising: a memory, a transceiver and a processor,
wherein the memory is configured to store a computer program; the transceiver is configured to receive and transmit data under the control of the processor; and the processor is configured to read the computer program from the memory to perform the following operations:
obtaining a radio resource control (RRC) signaling, wherein the RRC signaling comprises at least one set of beam configuration parameters, each set of beam configuration parameters in the at least one set of beam configuration parameters comprises beam information and a first parameter corresponding to the beam information, and the first parameter comprises at least one of a periodicity or a subcarrier spacing (SCS); and
determining a target beam configuration parameter according to the at least one set of beam configuration parameters, wherein the target beam configuration parameter is used for data transmission in an access link, and the access link is a transmission link between an NCR and a UE.

25. The apparatus according to claim 24, wherein the beam information comprises at least one of the following:
beam index; or
time resource set of a beam.

26. The apparatus according to claim 25, wherein the time resource set comprises at least one of the following:
a first slot offset, wherein the first slot offset comprises a slot offset of a starting slot of the periodicity relative to a starting position of a radio frame number;
a second slot offset, wherein the second slot offset comprises a slot offset of a starting slot position of a time resource of the beam relative to a starting position of the periodicity;
starting symbol information, wherein the starting symbol information comprises a symbol offset of a starting symbol position of a time resource of the beam relative to a starting slot within the periodicity; or
duration information, wherein the duration information comprises a number of symbols corresponding to a length of a time resource of the beam.

27. The apparatus according to claim 24 or 25, wherein a length of the periodicity is an integer multiple of a slot configuration in a time division duplex (TDD) system; or
a length of the periodicity is an integer multiple of a periodicity of a synchronization signal/physical broadcast channel signal block (SSB); or
a length of the periodicity is a configured candidate periodicity length.

28. The apparatus according to claim 24, wherein the SCS is a first subcarrier spacing or a second subcarrier spacing,
wherein the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between the NCR and a base station.

29. The apparatus according to claim 24, wherein an effective time of the beam information comprises any one of the following:
a starting time of a target slot, wherein the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers;
a starting time of a target subframe, wherein the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers; or
a starting time of a target periodicity, wherein the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers.

30. An apparatus for indicating a beam configuration parameter, comprising: a memory, a transceiver, and a processor,
wherein the memory is configured to store a computer program; the transceiver is configured to receive and transmit data under the control of the processor; and the processor is configured to read the computer program from the memory to perform the following operations:
transmitting a radio resource control (RRC) signaling to, wherein the RRC signaling comprises at least one set of beam configuration parameters, each set of beam configuration parameters in the at least one set of beam configuration parameters comprises beam information and a first parameter corresponding to the beam information, and the first parameter comprises at least one of a periodicity or a subcarrier spacing (SCS).

31. The apparatus according to claim 30, wherein the beam information comprises at least one of the following:
beam index; or
time resource set of a beam.

32. The apparatus according to claim 31, wherein the time resource set comprises at least one of the following:
a first slot offset, wherein the first slot offset comprises a slot offset of a starting slot of the periodicity relative to a starting position of a radio frame number;
a second slot offset, wherein the second slot offset comprises a slot offset of a starting slot position of a time resource of the beam relative to a starting position of the periodicity;
starting symbol information, wherein the starting symbol information comprises a symbol offset of a starting symbol position of a time resource of the beam relative to a starting slot within the periodicity; or
duration information, wherein the duration information comprises a number of symbols corresponding to a length of a time resource of the beam.

33. The apparatus according to claim 30 or 31, wherein a length of the periodicity is an integer multiple of a slot configuration in a time division duplex (TDD) system; or
a length of the periodicity is an integer multiple of a periodicity of the synchronization signal/physical broadcast channel signal block (SSB); or
a length of the periodicity is a configured candidate periodicity length.

34. The apparatus according to claim 30, wherein the SCS is a first subcarrier spacing or a second subcarrier spacing,
wherein the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between an NCR and a base station.

35. The apparatus according to claim 30, wherein an effective time of the beam information comprises any one of the following:
a starting time of a target slot, wherein the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers;
a starting time of a target subframe, wherein the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers; or
a starting time of a target periodicity, wherein the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers.

36. An apparatus for determining a beam configuration parameter, comprising:
an obtaining unit, configured to obtain a radio resource control (RRC) signaling, wherein the RRC signaling comprises at least one set of beam configuration parameters, each set of beam configuration parameters in the at least one set of beam configuration parameters comprises beam information and a first parameter corresponding to the beam information, and the first parameter comprises at least one of a periodicity or a subcarrier spacing (SCS); and
a determining unit, configured to determine a target beam configuration parameter according to the at least one set of beam configuration parameters, wherein the target beam configuration parameter is used for data transmission in an access link, and the access link is a transmission link between an NCR and a UE.

37. The apparatus for determining a beam configuration parameter according to claim 36, wherein the beam information comprises at least one of the following:
beam index; or
time resource set of a beam.

38. The apparatus for determining a beam configuration parameter according to claim 37, wherein the time resource set comprises at least one of the following:
a first slot offset, wherein the first slot offset comprises a slot offset of a starting slot of the periodicity relative to a starting position of a radio frame number;
a second slot offset, wherein the second slot offset comprises a slot offset of a starting slot position of a time resource of the beam relative to a starting position of the periodicity;
starting symbol information, wherein the starting symbol information comprises a symbol offset of a starting symbol position of a time resource of the beam relative to a starting slot within the periodicity; or
duration information, wherein the duration information comprises a number of symbols corresponding to a length of a time resource of the beam.

39. The apparatus for determining a beam configuration parameter according to claim 36 or 37, wherein a length of the periodicity is an integer multiple of a slot configuration in a time division duplex (TDD) system; or
a length of the periodicity is an integer multiple of a periodicity of a synchronization signal/physical broadcast channel signal block (SSB); or
a length of the periodicity is a configured candidate periodicity length.

40. The apparatus for determining beam configuration parameters according to claim 36, wherein the SCS is a first subcarrier spacing or a second subcarrier spacing,
wherein the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between the NCR and a base station.

41. The apparatus for determining a beam configuration parameter according to claim 36, wherein an effective time of the beam information comprises any one of the following:
a starting time of a target slot, wherein the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers;
a starting time of a target subframe, wherein the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers; or
a starting time of a target periodicity, wherein the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers.

42. The apparatus for determining a beam configuration parameter according to claim 37, wherein the RRC signaling comprises a first RRC signaling and a second RRC signaling, the first RRC signaling comprises a first configuration parameter, the second RRC signaling comprises a second configuration parameter, an obtaining time of the second RRC signaling is later than an obtaining time of the first RRC signaling, the first configuration parameter comprises at least one set of beam configuration parameters, and the second configuration parameter comprises at least one set of beam configuration parameters.

43. The apparatus for determining a beam configuration parameter according to claim 42, wherein the first configuration parameter comprises one set of beam configuration parameters, and the second configuration parameter comprises one set of beam configuration parameters;
the determining unit is further configured to: after obtaining the second RRC signaling, determine the one set of beam configuration parameters comprised in the second configuration parameter as the target beam configuration parameter; or
after obtaining the second RRC signaling, determine the target beam configuration parameter according to a positional relationship between a time resource indicated by the first configuration parameter and a time resource indicated by the second configuration parameter.

44. The apparatus for determining a beam configuration parameter according to claim 43, wherein the determining unit is further configured to:
in a case that a first condition is met, determine the target beam configuration parameter according to the positional relationship between the time resource indicated by the first configuration parameter and the time resource indicated by the second configuration parameter; and/or,
in a case that the first condition is not met, determine the one set of beam configuration parameters comprised in the second configuration parameter as the target beam configuration parameter;
wherein the first condition comprises at least one of the following:
a periodicity in the first configuration parameter is the same as a periodicity in the second configuration parameter; or
an SCS in the first configuration parameter is the same as an SCS in the second configuration parameter.

45. The apparatus for determining a beam configuration parameter according to claim 43, wherein the determining unit is further configured to:
in a case that the time resource indicated by the first configuration parameter at least partially overlaps the time resource indicated by the second configuration parameter, determine the one set of beam configuration parameters comprised in the second configuration parameter as the target beam configuration parameter; or
in a case that the time resource indicated by the first configuration parameter does not overlap with the time resource indicated by the second configuration parameter, determine the one set of beam configuration parameters comprised in the first configuration parameter and the one set of beam configuration parameters comprised in the second configuration parameter as the target beam configuration parameter.

46. The apparatus for determining a beam configuration parameter according to claim 42, wherein the first RRC signaling further comprises first priority indication information;
the second RRC signaling further comprises second priority indication information;
wherein the first priority indication information is used to indicate that a priority of the first configuration parameter is a first priority, and the second priority indication information is used to indicate that a priority of the second configuration parameter is a second priority.

47. The apparatus for determining a beam configuration parameter according to claim 46, wherein the first configuration parameter comprises one set of beam configuration parameters, and the second configuration parameter comprises one set of beam configuration parameters;
the determining unit is further configured to:
in a case that a second condition is met, for a first time resource, determine one set of beam configuration parameters comprised by a configuration parameter corresponding to a target priority as the target beam configuration parameter, and for a second time resource, determine the one set of beam configuration parameters comprised in the first configuration parameter and the one set of beam configuration parameters comprised in the second configuration parameter as the target beam configuration parameter, wherein the target priority is a higher priority of the first priority and the second priority; and/or,
in a case that the second condition is not met, determine the one set of beam configuration parameters comprised in the first configuration parameter and the one set of beam configuration parameters comprised in the second configuration parameter as the target configuration parameter;
wherein the second condition comprises any one of the following:
a time resource indicated by the first configuration parameter at least partially overlaps a time resource indicated by the second configuration parameter;
a periodicity in the first configuration parameter is the same as a periodicity in the second configuration parameter, and a time resource in the first configuration parameter at least partially overlaps a time resource in the second configuration parameter;
an SCS in the first configuration parameter is the same as an SCS in the second configuration parameter, and a time resource in the first configuration parameter at least partially overlaps a time resource in the second configuration parameter; or
an SCS in the first configuration parameter is the same as an SCS in the second configuration parameter, a periodicity in the first configuration parameter is the same as a periodicity in the second configuration parameter, and a time resource in the first configuration parameter at least partially overlaps a time resource in the second configuration parameter,
wherein the first time resource is an overlapping time resource between the time resource indicated by the first configuration parameter and the time resource indicated by the second configuration parameter; and
the second time resource is a time resource of the time resource indicated by the first configuration parameter and the time resource indicated by the second configuration parameter excluding the first time resource.

48. The apparatus for determining a beam configuration parameter according to claim 42, wherein the first RRC signaling further comprises first index information, and the second RRC signaling further comprises second index information;
wherein the first index information comprises an index corresponding to each set of beam configuration parameters in the first configuration parameter, and the second index information comprises an index corresponding to each set of beam configuration parameters in the second configuration parameter.

49. The apparatus for determining a beam configuration parameter according to claim 48, wherein the first configuration parameter comprises at least one set of beam configuration parameters, and the second configuration parameter comprises at least one set of beam configuration parameters;
the determining unit is further configured to:
in a case that a first index corresponding to a first set of beam configuration parameters in the first configuration parameter is different from a second index corresponding to a second set of beam configuration parameters in the second configuration parameter, determine the first set of beam configuration parameters corresponding to the first index and the second set of beam configuration parameters corresponding to the second index as the target beam configuration parameter; or,
in a case that a first index corresponding to a first set of beam configuration parameters in the first configuration parameter is the same as a second index corresponding to a second set of beam configuration parameters in the second configuration parameter, determine the second set of beam configuration parameters as a target beam configuration parameter corresponding to the first index; or,
wherein the third condition comprises one or more of the following:
a periodicity in the first set of beam configuration parameters and a periodicity in the second set of beam configuration parameters are the same or different; or
an SCS in the first set of beam configuration parameters and an SCS in the second set of beam configuration parameters are the same or different,
wherein the first set of beam configuration parameters is any one set of beam configuration parameters in the at least one set of beam configuration parameters comprised in the first configuration parameter, and the second set of beam configuration parameters is any one of the beam configuration parameters in at least one set of beam configuration parameters comprised in the second configuration parameter.

50. The apparatus for determining a beam configuration parameter according to claim 49, wherein the determining unit is further configured to:
in a case that the periodicity in the first set of beam configuration parameters is the same as the periodicity in the second set of beam configuration parameters, the SCS in the first set of beam configuration parameters is the same as the SCS in the second set of beam configuration parameters, and a time resource indicated by the first set of beam configuration parameters at least partially overlaps a time resource indicated by the second set of beam configuration parameters, for a third time resource, determine the second set of beam configuration parameters as the target beam configuration parameter corresponding to the first index, and for a fourth time resource, determine the first set of beam configuration parameters and the second set of beam configuration parameters as the target beam configuration parameter corresponding to the first index, wherein the third time resource is an overlapping time resource between the time resource indicated by the first set of beam configuration parameters and the time resource indicated by the second set of beam configuration parameters, and the fourth time resource is a time resource in the time resource indicated by the first set of beam configuration parameters and the time resource indicated by the second set of beam configuration parameters excluding the third time resource; and
in a case that the periodicity in the first set of configuration parameters is different from the periodicity in the second set of configuration parameters, and/or the SCS in the first set of configuration parameters is different from the SCS in the second set of configuration parameters, take the second set of beam configuration parameters as the target beam configuration parameter corresponding to the first index,
wherein the first set of beam configuration parameters is any one set of beam configuration parameters in the at least one set of beam configuration parameters comprised in the first configuration parameter, and the second set of beam configuration parameters is any one of the beam configuration parameters in at least one set of beam configuration parameters comprised in the second configuration parameter.

51. The apparatus for determining a beam configuration parameter according to claim 37, wherein the determining unit is further configured to:
in a case that a fifth time resource indicated by at least one set of beam configuration parameters in the RRC signaling at least partially overlaps a sixth time resource indicated by a beam configuration parameter in a downlink control information (DCI), determine the target beam configuration parameter according to a first rule, a second rule or a third rule,
wherein the first rule comprises: for an overlapping resource, determine the target beam configuration parameter according to the at least one set of beam configuration parameters in the RRC signaling; for a resource in the fifth time resource excluding the overlapping resource, determine the target beam configuration parameter according to the at least one set of beam configuration parameters in the RRC signaling; and for a resource in the sixth time resource excluding the overlapping resource, determine the target beam configuration parameter according to the beam configuration parameter in the DCI;
the second rule comprises: for an overlapping resource, determine the target beam configuration parameter according to the at least one set of beam configuration parameters in the RRC signaling; and for a first target time resource, determine a beam configuration parameter of the first target time resource according to a part of the beam configuration parameter in the DCI, wherein the part of the beam configuration parameter in the DCI is a beam configuration parameter of a second target time resource, the second target time resource is a time resource in the sixth time resource excluding for a time resource before the overlapping resource, the first target time resource is a resource located after the overlapping resource, and a resource length corresponding to the first target time resource is the same as a resource length corresponding to the second target time resource;
the third rule comprises: for an overlapping resource, determine the target beam configuration parameter according to the beam configuration parameter in the DCI; for a resource in the fifth time resource excluding the overlapping resource, determine the target beam configuration parameter according to the at least one set of beam configuration parameters in the RRC signaling; and for a resource in the sixth time resource excluding the overlapping resource, determine the target beam configuration parameter according to the beam configuration parameter in the DCI.

52. The apparatus for determining a beam configuration parameter according to claim 51, wherein the determining unit is further configured to:
determine the target configuration parameter according to the first rule, the second rule or the third rule according to indication information transmitted by a network-side device,
wherein the indication information is used to indicate a priority relationship between the beam configuration parameters in the RRC signaling and the beam configuration parameter in the DCI, and the indication information is indicated through the RRC signaling or the DCI.

53. An apparatus for indicating a beam configuration parameter, comprising:
a transmitting unit, configured to transmit a radio resource control (RRC) signaling to a network controlled repeater (NCR), wherein the RRC signaling comprises at least one set of beam configuration parameters, each set of beam configuration parameters in the at least one set of beam configuration parameters comprises beam information and a first parameter corresponding to the beam information, and the first parameter comprises at least one of a periodicity or a subcarrier spacing (SCS).

54. The apparatus for indicating a beam configuration parameter according to claim 53, wherein the beam information comprises at least one of the following:
beam index; or
time resource set of a beam.

55. The apparatus for indicating a beam configuration parameter according to claim 54, wherein the time resource set comprises at least one of the following:
a first slot offset, wherein the first slot offset comprises a slot offset of a starting slot of the periodicity relative to a starting position of a radio frame number;
a second slot offset, wherein the second slot offset comprises a slot offset of a starting slot position of a time resource of the beam relative to a starting position of the periodicity;
starting symbol information, wherein the starting symbol information comprises a symbol offset of a starting symbol position of a time resource of the beam relative to a starting slot within the periodicity; or
duration information, wherein the duration information comprises a number of symbols corresponding to a length of a time resource of the beam.

56. The apparatus for indicating a beam configuration parameter according to claim 53 or 54, wherein a length of the periodicity is an integer multiple of a slot configuration in a time division duplex (TDD) system; or
a length of the periodicity is an integer multiple of a periodicity of the synchronization signal/physical broadcast channel signal block (SSB); or
a length of the periodicity is a configured candidate periodicity length.

57. The apparatus for indicating a beam configuration parameter according to claim 53, wherein the SCS is a first subcarrier spacing or a second subcarrier spacing,
wherein the first subcarrier spacing is determined according to a subcarrier spacing corresponding to a frequency band of the access link; and
the second subcarrier spacing is determined according to a subcarrier spacing corresponding to a frequency band of a control link, and the control link is a transmission link between the NCR and a base station.

58. The apparatus for indicating a beam configuration parameter according to claim 53, wherein an effective time of the beam information comprises any one of the following:
a starting time of a target slot, wherein the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers;
a starting time of a target subframe, wherein the target subframe is a first complete subframe located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers; or
a starting time of a target periodicity, wherein the target periodicity is a first complete periodicity located after a target slot, the target slot is a first slot among K1 slots located after a transmission slot of the RRC signaling or a first slot among K2 slots located after a transmission slot of feedback information of the RRC signaling, the feedback information of the RRC signaling comprises acknowledgement (ACK) or negative acknowledgement (NACK), and both K1 and K2 are positive integers.

59. A processor readable storage medium, wherein the processor-readable storage medium stores a computer program, and the computer program is configured to cause a processor to perform steps of the method for determining a beam configuration parameter according to any one of claims 1 to 17, or to perform steps of the method for indicating a beam configuration parameter according to any one of claims 18 to 23.
